# EUROPEAN PATENT APPLICATION

(11) **EP 4 763 526 A1**
(43) Date of publication of application: **24.06.2026**
(21) Application number: 25224798.6
(22) Date of filing: 18.12.2025
(51) Int. Cl.: B41J 29/38, G03G 21/00, G03G 21/02, G06Q 10/20, G06Q 30/06

(54) **CLEANING SYSTEM**

(30) Priority: 20.12.2024 JP 2024224653
(71) Applicant: Seiko Epson Corporation, Tokyo 160-8801 (JP)
(72) Inventor: KAWAKAMI, Yasushi, Suwa-shi, 392-8502 (JP); KITAJIMA, Shiho, Suwa-shi, 392-8502 (JP); MINAMI, Tomokazu, Suwa-shi, 392-8502 (JP)
(74) Representative: Lewis Silkin LLP

(57) **Abstract**

A cleaning system includes a cleaning apparatus that executes a cleaning operation on a container, a control apparatus that controls the cleaning operation of the cleaning apparatus, and a management apparatus that manages the control apparatus, in which the control apparatus and the management apparatus are configured to communicate with each other via a network.

## Description

The present application is based on, and claims priority from JP Application Serial Number 2024-224653, filed December 20, 2024, the disclosure of which is hereby incorporated by reference herein in its entirety.

### BACKGROUND

### 1. Technical Field

The present disclosure relates to a technology for a cleaning system.

### 2. Related Art

In the related art, a system with which a user of a printing apparatus pays a rate fee for a predetermined maintenance agreement period in advance so that the user can be provided with consumables without paying an actual cost of the consumables when the consumables are replaced within the agreement period is known (JP-A-2007-156531). In this system, the printing apparatus owned by the user, a management apparatus that manages information on the printing apparatus, and a server that manages a maintenance agreement or delivery of the consumables using information acquired from the management apparatus communicate with each other via a communication network. Accordingly, the user is provided with the consumables corresponding to usage status of the printing apparatus.

In general, a technology for collecting, cleaning, and reusing a used ink storage container is known. The present inventors have come up with an idea of combining the system in the related art with the technology for reusing the cleaned container to provide a user with a refill product in which the cleaned container is replenished with ink. However, when the used ink storage container is collected and cleaned in a first country, and the cleaned container is exported to a second country different from the first country and replenished with ink to produce the refill product, an environmental convention should be considered. Such an issue is not limited to the consumables such as the ink storage container related to use of the printing apparatus and is common to a case where a container that can be refilled with contents is collected, cleaned, and reused.

### SUMMARY

According to an aspect of the present disclosure, there is provided a cleaning system. A cleaning system includes a cleaning apparatus that executes a cleaning operation on a container, a control apparatus that controls the cleaning operation of the cleaning apparatus, and a management apparatus that manages the control apparatus, in which the control apparatus and the management apparatus are configured to communicate with each other via a network.

### BRIEF DESCRIPTION OF THE DRAWINGS

FIG. 1 is a conceptual diagram of a resource recycling system.
FIG. 2 is a block diagram showing a configuration of a cleaning apparatus in a first embodiment.
FIG. 3 is a block diagram showing a configuration of a cleaning control apparatus in the first embodiment.
FIG. 4 is a block diagram showing an example of a refill apparatus.
FIG. 5 is a block diagram showing an example of a refill control apparatus.
FIG. 6 is a block diagram showing a configuration of a management apparatus in the first embodiment.
FIG. 7 is a conceptual diagram of a product management table.
FIG. 8 is a conceptual diagram of a business operator management table.
FIG. 9 is a flowchart showing a cleaning management method in the first embodiment.
FIG. 10 is a flowchart showing details of an authentication step in the first embodiment.
FIG. 11 is a flowchart showing details of a cleaning step in the first embodiment.
FIG. 12 is a flowchart showing details of a cleaning preparation step in the first embodiment.
FIG. 13 is a first flowchart showing details of a cleaning operation step in the first embodiment.
FIG. 14 is a second flowchart showing details of the cleaning operation step in the first embodiment.
FIG. 15 is a flowchart showing details of a record management step in the first embodiment.
FIG. 16 is a flowchart showing details of a number calculation step in the first embodiment.
FIG. 17 is a flowchart showing details of a classification step in the first embodiment.
FIG. 18 is a flowchart showing details of an alert output step in the first embodiment.
FIG. 19 is a flowchart showing details of a cost calculation step in the first embodiment.
FIG. 20 is a block diagram showing a configuration of a cleaning apparatus in a second embodiment.
FIG. 21 is a block diagram showing a configuration of a cleaning control apparatus in the second embodiment.
FIG. 22 is a block diagram showing a configuration of a management apparatus in the second embodiment.
FIG. 23 is a flowchart showing a cleaning management method in the second embodiment.
FIG. 24 is a flowchart showing details of a cleaning level determination method in the second embodiment.
FIG. 25 is a flowchart showing details of an alert output step in the second embodiment.
FIG. 26 is a block diagram showing a configuration of a management apparatus in a third embodiment.
FIG. 27 is a flowchart showing a cleaning management method in the third embodiment.
FIG. 28 is a flowchart showing details of a quantity specifying step in the third embodiment.
FIG. 29 is a flowchart showing details of a supply quantity calculation step in the third embodiment.
FIG. 30 is a block diagram showing a configuration of a management apparatus in a fourth embodiment.
FIG. 31 is a flowchart showing a cleaning management method in the fourth embodiment.
FIG. 32 is a flowchart showing details of a number calculation step in the fourth embodiment.
FIG. 33 is a flowchart showing details of an alert output step in the fourth embodiment.
FIG. 34 is a block diagram showing a configuration of a management apparatus in a fifth embodiment.
FIG. 35 is a flowchart showing a first example of an alert output step in the fifth embodiment.
FIG. 36 is a flowchart showing a second example of the alert output step in the fifth embodiment.
FIG. 37 is a flowchart showing a third example of the alert output step in the fifth embodiment.
FIG. 38 is a block diagram showing a configuration of a management apparatus in a sixth embodiment.
FIG. 39 is a flowchart showing details of an alert output step in the sixth embodiment.

### DESCRIPTION OF EMBODIMENTS

### A. First Embodiment

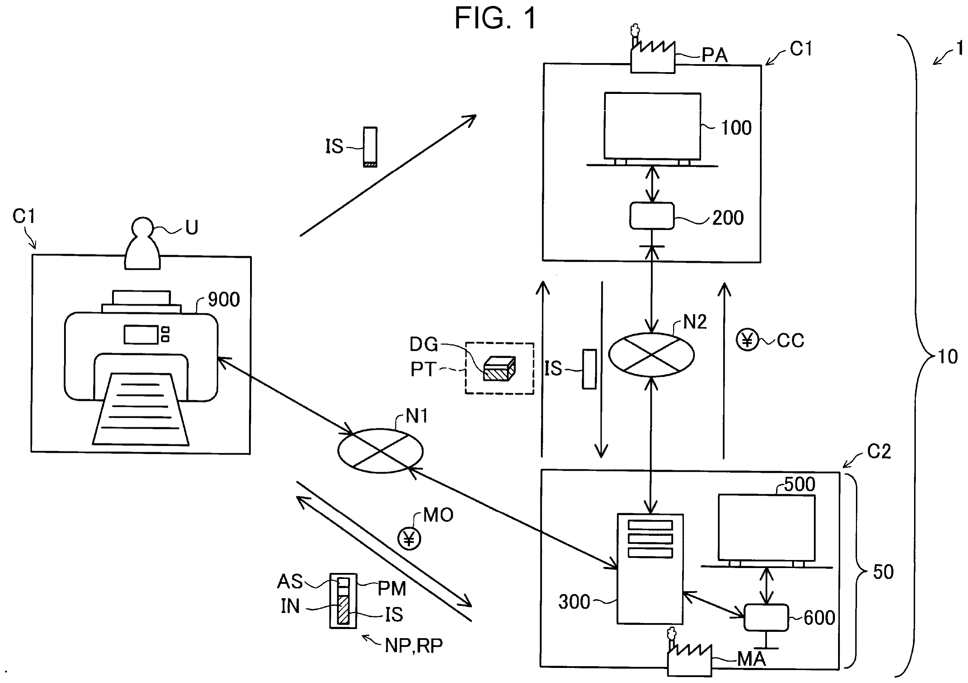

FIG. 1 is a conceptual diagram of a resource recycling system 1. The resource recycling system 1 is a system for repeatedly providing a user U of the printing apparatus 900 with consumables such as an ink cartridge and an ink bottle related to use of the printing apparatus 900. In the resource recycling system 1, first, a new product NP that is produced in a business facility of a production business operator MA and to which product identification information such as a lot number and a serial number is assigned is distributed in the market. The user U pays a price MO to the production business operator MA. Accordingly, the new product NP is provided to the user U. Among types of the new product NP, an ink storage container IS that is used up because ink IN is reduced as the user U uses the ink IN is collected free of charge or for a fee in accordance with usage status of the printing apparatus 900 or a request from the user U. The collected ink storage container IS is cleaned in a business facility of a partner business operator PA that has signed a partnership agreement with the production business operator MA and that has the business facility in a first country C1 that is the same as a location of the user U. The cleaned ink storage container IS is exported from the first country C1 to a second country C2 where the business facility of the production business operator MA is present. The cleaned ink storage container IS is replenished with the ink IN to be remanufactured as a refill product RP in the business facility of the production business operator MA. The refill product RP is exported again from the second country C2 to the first country C1 and is distributed again in the market in the first country C1. The user U pays the price MO to the production business operator MA. Accordingly, the refill product RP is provided to the user U. The series of flows of collecting the used ink storage container IS, remanufacturing the used ink storage container IS as the refill product RP, and providing the refill product RP to the user U are repeated. Accordingly, the ink storage container IS is recycled across countries. The products NP and RP as the consumables related to the use of the printing apparatus 900 may be sold to the user U through the partner business operator PA or may be sold to the user U through an intermediary business operator other than the partner business operator PA, such as a sales agency of the production business operator MA. Out of the products NP and RP, the used ink storage container IS may be directly collected by the partner business operator PA, collected by a collection business operator, not shown, or collected by sending the used ink storage container IS from the user U to the partner business operator PA or the collection business operator. To increase a collection quantity of the ink storage container IS from the user U, the user U may be rewarded in accordance with the collection quantity of the ink storage container IS.

In the present embodiment, the user U pays a rate fee for a predetermined maintenance agreement period to the production business operator MA in advance. According to this maintenance agreement, various types of information such as the usage status of the printing apparatus 900 are shared with the production business operator MA from the user U via a network N1. Furthermore, various types of information such as collection status of the ink storage container IS are shared with the production business operator MA from the partner business operator PA via a network N2. Accordingly, the production business operator MA determines a provision quantity and a provision time of the refill product RP to be provided to the user U based on the various types of information shared from the user U and the partner business operator PA. The production business operator MA creates a production plan such as a scheduled cleaning quantity of the ink storage container IS in the partner business operator PA and a scheduled production quantity of the refill product RP in the production business operator MA in accordance with the provision quantity and the provision time of the refill product RP. The production business operator MA supplies a member PT to be used for cleaning the ink storage container IS to the partner business operator PA in accordance with the production plan. The member PT to be used for cleaning the ink storage container IS is, for example, a cleaning agent DG for cleaning the inside of the ink storage container IS. The partner business operator PA cleans the number of ink storage containers IS corresponding to the scheduled cleaning quantity determined by the production business operator MA using the member PT supplied from the production business operator MA. The production business operator MA produces the number of refill products RP corresponding to the scheduled production quantity using the ink storage container IS cleaned in the partner business operator PA and provides the refill product RP of a predetermined provision quantity to the user U at a predetermined provision time. Accordingly, the user U is provided with the products NP and RP without paying the actual cost of the ink storage container IS during the maintenance agreement period. In another embodiment, the user U may pay a product price each time the products NP and RP are provided, instead of paying the rate fee.

The ink storage container IS is cleaned using a cleaning system 10. The cleaning system 10 includes a cleaning apparatus 100 that cleans the ink storage container IS by executing a cleaning operation on the used ink storage container IS, and a cleaning control apparatus 200 that controls the operation of the cleaning apparatus 100. The cleaning system 10 further includes a management apparatus 300 that manages the cleaning control apparatus 200 and a refill control apparatus 600, described later. In the present embodiment, the cleaning apparatus 100 executes, as the cleaning operation, at least an inside cleaning operation of cleaning the inside of the ink storage container IS using the cleaning agent DG. The cleaning apparatus 100 may execute, as the cleaning operation, a collection operation of discharging the ink IN remaining in the used ink storage container IS from the ink storage container IS and collecting the discharged ink IN. When the cleaning apparatus 100 executes a plurality of operations, the cleaning apparatus 100 may execute all of the plurality of operations included in the cleaning operation or execute a part of the plurality of operations.

The refill product RP is produced using a refill system 50. The refill system 50 includes a refill apparatus 500 that produces the refill product RP by executing a refill operation on the cleaned ink storage container IS, the refill control apparatus 600 that controls the operation of the refill apparatus 500, and the above management apparatus 300. The refill apparatus 500 executes, as the refill operation, at least a replenishing operation of replenishing the cleaned ink storage container IS with the ink IN. The refill apparatus 500 may execute a refill operation other than the replenishing operation. For example, the refill apparatus 500 may execute, as the refill operation, an inspection operation of inspecting an exterior for inspecting quality of the ink storage container IS set in the apparatus 500 or an attaching operation of attaching an accessory AS such as a cap or an adapter to the ink storage container IS. The attaching operation may include an operation of detaching the accessory AS of the ink storage container IS for replacement. The refill apparatus 500 may include, as the refill operation, a packaging operation of packaging the ink storage container IS using a packaging material PM such as a bag or an outer box. When the refill apparatus 500 executes a plurality of operations, the refill apparatus 500 may execute all of the plurality of operations included in the refill operation or execute a part of the plurality of operations.

The cleaning apparatus 100 and the cleaning control apparatus 200 are lent free of charge to the partner business operator PA from the production business operator MA and are installed in the business facility of the partner business operator PA present in the first country C1. The management apparatus 300 is installed in the business facility of the production business operator MA present in the second country C2. The cleaning apparatus 100 and the cleaning control apparatus 200 may be configured to be integrated with each other or be configured to be separated from each other. The cleaning apparatus 100 and the cleaning control apparatus 200 are communicably connected to each other by wired communication via a cable or wireless communication via a network. The cleaning control apparatus 200 may be connected with one cleaning apparatus 100 or a plurality of cleaning apparatuses 100. The cleaning control apparatus 200 and the management apparatus 300 are communicably connected to each other by wireless communication via the network N2. Operation status of the cleaning operation in the cleaning apparatus 100 is shared with the management apparatus 300 via the cleaning control apparatus 200 by communication among the apparatuses 100, 200, and 300. Accordingly, the partner business operator PA cleans the used ink storage container IS under management of the production business operator MA. The production business operator MA calculates a cleaning cost CC in the partner business operator PA for each predetermined specific period and pays the cleaning cost CC to the partner business operator PA. The specific period may be a period determined in accordance with an elapse of time, such as every month, or a period determined in accordance with the operation status of the cleaning operation, such as a period after reaching the scheduled cleaning quantity. The partner business operator PA may receive a certain amount of money in advance from the production business operator MA as a deposit and refund a surplus or additionally receive a deficit in accordance with the number of cleaned ink storage containers IS or the like. Furthermore, a billing process may vary depending on whether a genuine product of an own company is cleaned, a genuine product of another company different from the own company is cleaned, or a compatible product is cleaned.

The refill apparatus 500 and the refill control apparatus 600 are installed in the business facility of the production business operator MA present in the second country C2. The refill apparatus 500 and the refill control apparatus 600 may be configured to be integrated with each other or be configured to be separated from each other. The refill apparatus 500, the refill control apparatus 600, and the management apparatus 300 are communicably connected to each other by wired communication via a cable or wireless communication via a network. The refill control apparatus 600 may be connected with one refill apparatus 500 or a plurality of refill apparatuses 500. Operation status of the refill operation in the refill apparatus 500 is shared with the management apparatus 300 via the refill control apparatus 600 by communication among the apparatuses 300, 500, and 600. Accordingly, the production business operator MA manages a production record of the refill product RP.

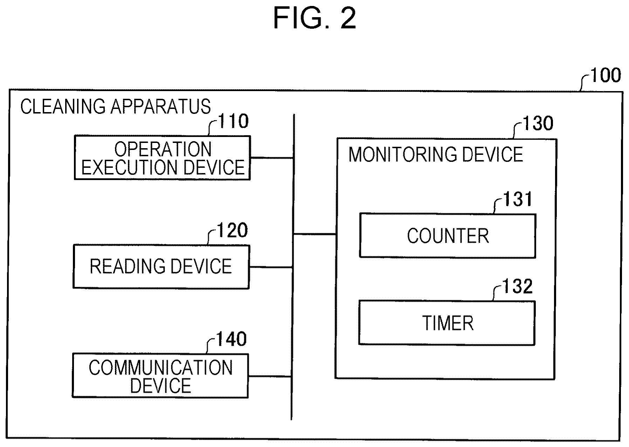

FIG. 2 is a block diagram showing a configuration of the cleaning apparatus 100 in a first embodiment. The cleaning apparatus 100 includes an operation execution device 110, a reading device 120, a monitoring device 130, and a communication device 140.

The operation execution device 110 can execute the cleaning operation. The operation execution device 110 includes, for example, one or more actuators driven under control of the cleaning control apparatus 200. The operation execution device 110 has a plurality of operation modes set in accordance with an authentication result of the management apparatus 300. The operation execution device 110 has, for example, a permission mode as an operation mode in which the cleaning operation can be executed, and a prohibition mode as an operation mode in which the cleaning operation cannot be executed.

The reading device 120 reads a specific medium to acquire the product identification information and transmits a reading result to the cleaning control apparatus 200. The reading device 120 optically reads, for example, a code that is printed on a label attached to the ink storage container IS and that stores the product identification information. The code is, for example, a matrix type two-dimensional code such as a QR code (registered trademark). The code may be a one-dimensional code such as a barcode or a stack type two-dimensional code. The reading device 120 may electrically read a memory that is included in a circuit substrate attached to the ink storage container IS and that stores the product identification information.

The monitoring device 130 monitors the operation status of the cleaning operation and transmits a monitoring result to the cleaning control apparatus 200. In the present embodiment, the monitoring device 130 includes a counter 131 and a timer 132. The counter 131 counts the number of executions of the cleaning operation. The timer 132 tracks an operation time of the cleaning operation. The operation time of the cleaning operation varies for each of the genuine product of the own company, the genuine product of the other company, and the compatible product.

The communication device 140 communicates with the cleaning control apparatus 200 via wired communication or wireless communication. The communication device 140 is coupled to the operation execution device 110, the reading device 120, and the monitoring device 130.

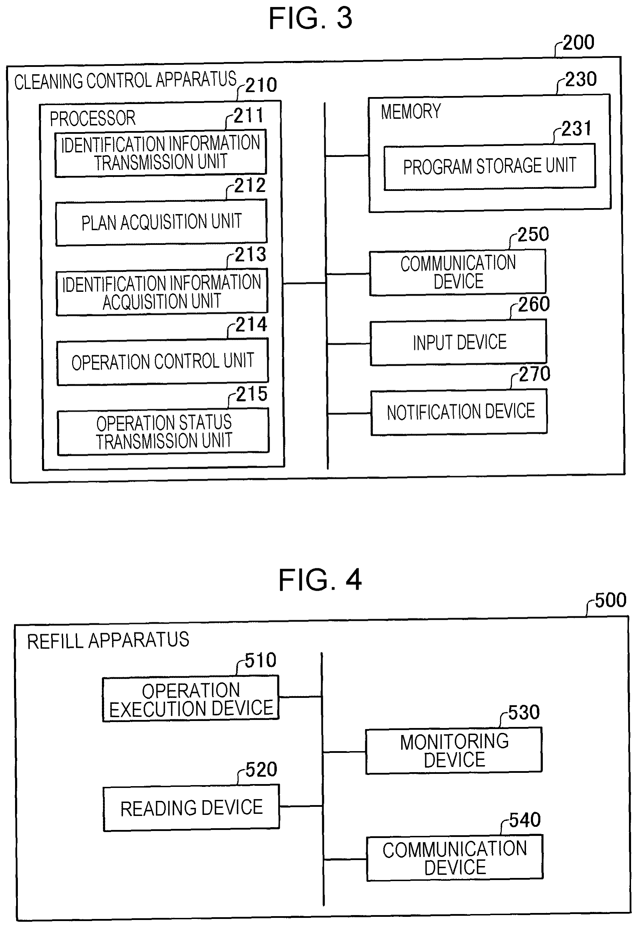

FIG. 3 is a block diagram showing a configuration of the cleaning control apparatus 200 in the first embodiment. The cleaning control apparatus 200 includes a processor 210, a memory 230, a communication device 250, an input device 260, and a notification device 270.

The communication device 250 communicates with the cleaning apparatus 100 via wired communication or wireless communication. The communication device 250 further communicates with the management apparatus 300 via wireless communication. The communication device 250 is coupled to the processor 210, the memory 230, the input device 260, and the notification device 270.

The input device 260 receives input from the partner business operator PA. The input device 260 is, for example, a touch panel, a mouse, or a keyboard.

The notification device 270 notifies the partner business operator PA of various types of information. The notification device 270 is, for example, a display device such as a display. The notification device 270 may be an audio generation device such as a speaker.

The memory 230 is a computer-readable recording medium and is an internal storage device in a computer, such as a RAM or a ROM, an external storage device such as a hard disk, or a combination thereof. The memory 230 includes a program storage unit 231. The program storage unit 231 stores various programs to be executed by the processor 210.

The processor 210 functions as an identification information transmission unit 211, a plan acquisition unit 212, an identification information acquisition unit 213, an operation control unit 214, and an operation status transmission unit 215 by executing a program stored in the program storage unit 231.

The identification information transmission unit 211 transmits apparatus identification information that is identification information of the cleaning control apparatus 200, to the management apparatus 300. The apparatus identification information is, for example, an ID and a password assigned from the production business operator MA by signing a partnership agreement with the production business operator MA. In this case, the identification information transmission unit 211 transmits, for example, the ID and the password input by the partner business operator PA via the input device 260 to the management apparatus 300. The apparatus identification information may be identification information unique to each cleaning control apparatus 200, such as a lot number or a serial number. In this case, the identification information transmission unit 211 may transmit the apparatus identification information stored in an identification information storage unit, not shown, of the memory 230 to the management apparatus 300.

The plan acquisition unit 212 acquires the production plan from the management apparatus 300. The production plan includes, for example, the scheduled cleaning quantity.

The identification information acquisition unit 213 acquires the product identification information using the reading result of the reading device 120. For example, when a captured image including the code is transmitted from the reading device 120 to the cleaning control apparatus 200 as the reading result, the identification information acquisition unit 213 executes the following process. In this case, the identification information acquisition unit 213, for example, generates a binary image by performing a binarization process on the captured image including the code and acquires the product identification information by decoding the code included in the binary image in accordance with a predetermined standard. When an electrical signal representing the product identification information is transmitted from the reading device 120 to the cleaning control apparatus 200 as the reading result, the identification information acquisition unit 213 may acquire the product identification information by analyzing the electrical signal. The identification information acquisition unit 213 transmits the acquired product identification information to the management apparatus 300.

When the operation of the cleaning apparatus 100 is permitted by the management apparatus 300, the operation control unit 214 sets the operation mode of the operation execution device 110 to the permission mode. Meanwhile, when the operation of the cleaning apparatus 100 is not permitted by the management apparatus 300, the operation control unit 214 sets the operation mode of the operation execution device 110 to the prohibition mode. Accordingly, when the operation of the cleaning apparatus 100 is permitted by the management apparatus 300, the operation control unit 214 drives the operation execution device 110 to clean the used ink storage container IS using the member PT supplied from the production business operator MA.

The operation status transmission unit 215 acquires the monitoring result of the monitoring device 130 in the specific period and transmits the monitoring result to the management apparatus 300 as the operation status of the cleaning operation. In the present embodiment, the operation status transmission unit 215 acquires the monitoring result including an output result of the counter 131 indicating the number of executions of the cleaning operation in the specific period and an output result of the timer 132 indicating the operation time of the cleaning operation. The operation status transmission unit 215 transmits the operation status of the cleaning operation including the number of executions of the cleaning operation in the specific period and the operation time of the cleaning operation in the specific period to the management apparatus 300. When the genuine product of the own company is cleaned, the operation status transmission unit 215 transmits the operation status in association with the product identification information. The operation status transmission unit 215 may transmit used member information related to the member PT used for cleaning the ink storage container IS to the management apparatus 300 in association with the product identification information. When the genuine product of the other company is cleaned by signing the agreement with the other company, the operation status transmission unit 215 can transmit the operation status in association with the product identification information, in the same manner as that for the genuine product of the own company.

FIG. 4 is a block diagram showing an example of the refill apparatus 500. The refill apparatus 500 includes an operation execution device 510, a reading device 520, a monitoring device 530, and a communication device 540. The operation execution device 510 can execute the refill operation. The operation execution device 510 includes, for example, one or more actuators driven under control of the refill control apparatus 600. The reading device 520, like the reading device 120 of the cleaning apparatus 100, reads a specific medium and transmits a reading result to the refill control apparatus 600. The monitoring device 530 monitors the operation status of the refill operation such as the number of executions and the operation time of the refill operation and transmits a monitoring result to the refill control apparatus 600. The communication device 540 communicates with the refill control apparatus 600 via wired communication or wireless communication. The communication device 540 is coupled to the operation execution device 510, the reading device 520, and the monitoring device 530.

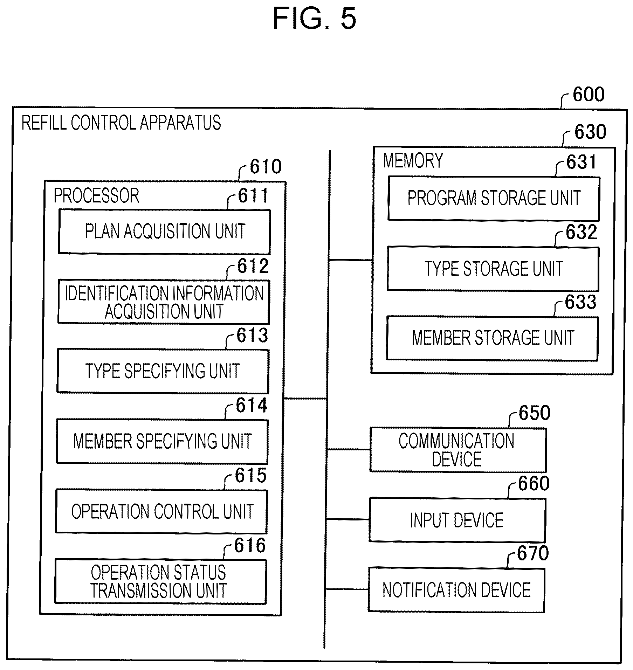

FIG. 5 is a block diagram showing an example of the refill control apparatus 600. The refill control apparatus 600 includes a processor 610, a memory 630, a communication device 650, an input device 660, and a notification device 670.

The communication device 650 communicates with the refill apparatus 500 via wired communication or wireless communication. The communication device 650 further communicates with the management apparatus 300 via wireless communication. The communication device 650 is coupled to the processor 610, the memory 630, the input device 660, and the notification device 670.

The input device 660 receives input from the partner business operator PA. The input device 660 is, for example, a touch panel, a mouse, or a keyboard.

The notification device 670 notifies the partner business operator PA of various types of information. The notification device 670 is, for example, a display device such as a display. The notification device 670 may be an audio generation device such as a speaker.

The memory 630 is a computer-readable recording medium and is an internal storage device in a computer, such as a RAM or a ROM, an external storage device such as a hard disk, or a combination thereof. The memory 630 includes a program storage unit 631, a type storage unit 632, and a member storage unit 633. The program storage unit 631 stores various programs to be executed by the processor 610.

The type storage unit 632 stores information for specifying a type of the ink storage container IS, such as a model number of the ink storage container IS. For example, the type storage unit 632 stores, in advance, a model number table, not shown, in which product identification information and the model number of the ink storage container IS are associated with each other.

The member storage unit 633 stores a configuration of a member corresponding to the type of the ink storage container IS. For example, the member storage unit 633 stores, in advance, a member table, not shown, showing the configuration of the member for each type of the ink storage container IS. In the member table, for example, a type and a replenishing amount of the ink IN, a type of the accessory AS, and a type of the packaging material PM are shown for each type of the ink storage container IS.

The processor 610 functions as a plan acquisition unit 611, an identification information acquisition unit 612, a type specifying unit 613, a member specifying unit 614, an operation control unit 615, and an operation status transmission unit 616 by executing a program stored in the program storage unit 631.

The plan acquisition unit 611 acquires the production plan from the management apparatus 300. The production plan includes, for example, the scheduled production quantity.

The identification information acquisition unit 612 acquires the product identification information using the reading result of the reading device 520 and transmits the acquired product identification information to the management apparatus 300.

The type specifying unit 613 specifies the type of the ink storage container IS from the product identification information with reference to the type storage unit 632. For example, the type specifying unit 613 specifies the type of the ink storage container IS by specifying the model number of the ink storage container IS corresponding to the product identification information acquired by the identification information acquisition unit 612 with reference to the model number table stored in the type storage unit 632.

The member specifying unit 614 specifies the configuration of the member corresponding to the type of the ink storage container IS specified by the type specifying unit 613 with reference to the member storage unit 633. For example, the member specifying unit 614 acquires the configuration of the member corresponding to the type of the ink storage container IS specified by the type specifying unit 613 with reference to the member table stored in the member storage unit 633. Accordingly, the member specifying unit 614 specifies the configuration of the member to be used for producing the refill product RP, such as the type and the replenishing amount of the ink IN, the type of the accessory AS, and the type of the packaging material PM.

The operation control unit 615 drives the operation execution device 510 to produce the refill product RP using the member specified by the member specifying unit 614.

The operation status transmission unit 616 acquires the monitoring result of the monitoring device 530 in the specific period and transmits the monitoring result to the management apparatus 300 in association with the product identification information as the operation status of the refill operation. The operation status transmission unit 616 may transmit the used member information related to the member used for producing the refill product RP to the management apparatus 300 in association with the product identification information.

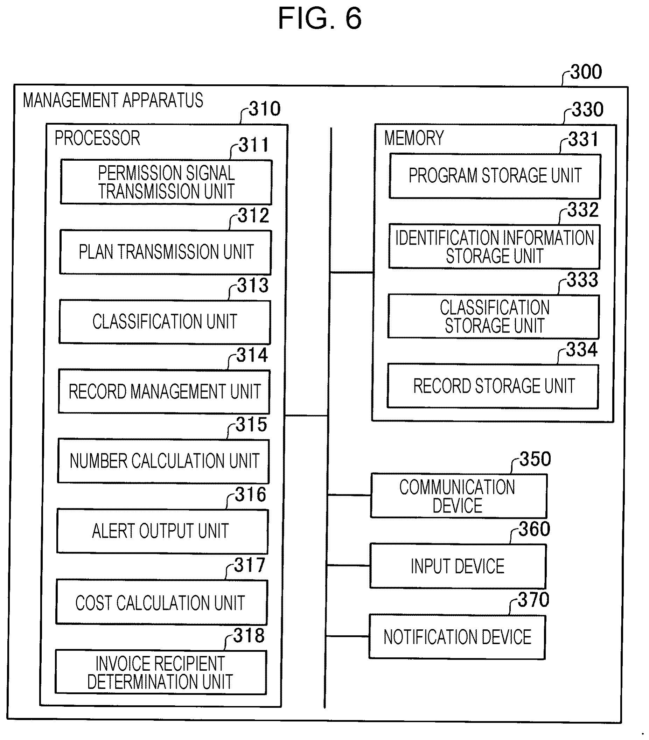

FIG. 6 is a block diagram showing a configuration of the management apparatus 300 in the first embodiment. The management apparatus 300 includes a processor 310, a memory 330, a communication device 350, an input device 360, and a notification device 370.

The communication device 350 communicates with the cleaning control apparatus 200 and the refill control apparatus 600 via wireless communication. The communication device 350 is coupled to the processor 310, the memory 330, the input device 360, and the notification device 370.

The input device 360 receives input from the production business operator MA. The input device 360 is, for example, a touch panel, a mouse, or a keyboard.

The notification device 370 notifies the production business operator MA of various types of information. The notification device 370 is, for example, a display device such as a display. The notification device 370 may be an audio generation device such as a speaker.

The memory 330 is a computer-readable recording medium and is an internal storage device in a computer, such as a RAM or a ROM, an external storage device such as a hard disk, or a combination thereof. The memory 330 includes a program storage unit 331, an identification information storage unit 332, a classification storage unit 333, and a record storage unit 334. The program storage unit 331 stores various programs to be executed by the processor 310.

The identification information storage unit 332 stores, in advance, the apparatus identification information of a specific cleaning control apparatus 200. In the present embodiment, the apparatus identification information is stored in the identification information storage unit 332 at the start of a partnership agreement period and is deleted from the identification information storage unit 332 at the end of the partnership agreement period. Thus, the identification information storage unit 332 of the present embodiment stores the apparatus identification information of the cleaning control apparatus 200 lent to the partner business operator PA during the partnership agreement period.

The classification storage unit 333 stores information for classifying the ink storage container IS as any one of the genuine product of the own company, the genuine product of the other company different from the own company, or the compatible product other than the genuine product of the own company and the genuine product of the other company. The genuine product of the own company is a regular ink storage container IS provided from the production business operator MA that owns the management apparatus 300. The genuine product of the other company is a regular ink storage container IS provided from another production business operator MA competing with the production business operator MA that owns the management apparatus 300. The compatible product is a non-regular ink storage container IS provided from another business operator other than the production business operator MA. For example, the classification storage unit 333 stores, in advance, the product identification information of the genuine product of the own company in a classification table, not shown. The classification storage unit 333 may store features of the exterior of the ink storage container IS to classify the ink storage container IS from the exterior of the ink storage container IS. When the agreement is signed with the other company, the identification information of the genuine product of the other company may be added to the classification table.

The record storage unit 334 stores a cleaning record of the ink storage container IS for the cleaning apparatus 100. The record storage unit 334 stores, for example, a product management table showing the cleaning record of the ink storage container IS for each ink storage container IS and a business operator management table showing the cleaning record of the ink storage container IS for each partner business operator PA.

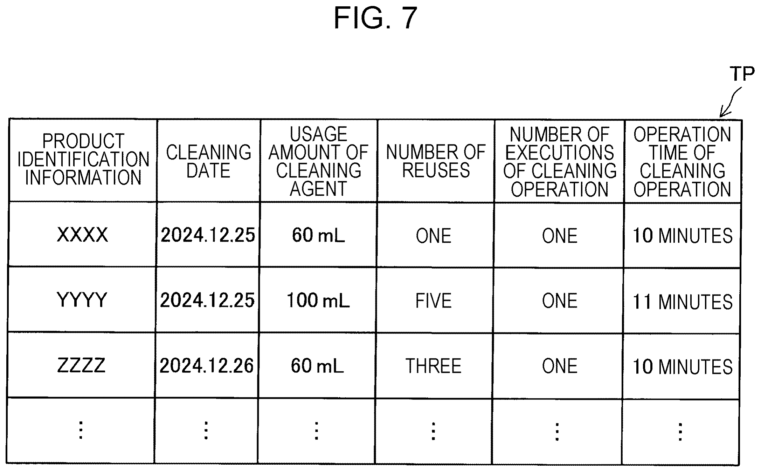

FIG. 7 is a conceptual diagram of a product management table TP. For example, the product management table TP stores a date when the ink storage container IS is cleaned, a usage amount of the cleaning agent DG used for cleaning the ink storage container IS, and the number of reuses of the ink storage container IS in association with the product identification information. The product management table TP may store information other than the above. For example, the product management table TP may store the apparatus identification information, business operator information related to the partner business operator PA, and warehouse information related to a warehouse storing the used ink storage container IS or the cleaned ink storage container IS. In principle, the product identification information is limited to the genuine product of the own company. However, when the agreement is signed with another competing company, identification information related to the genuine product of the other company may be stored and managed.

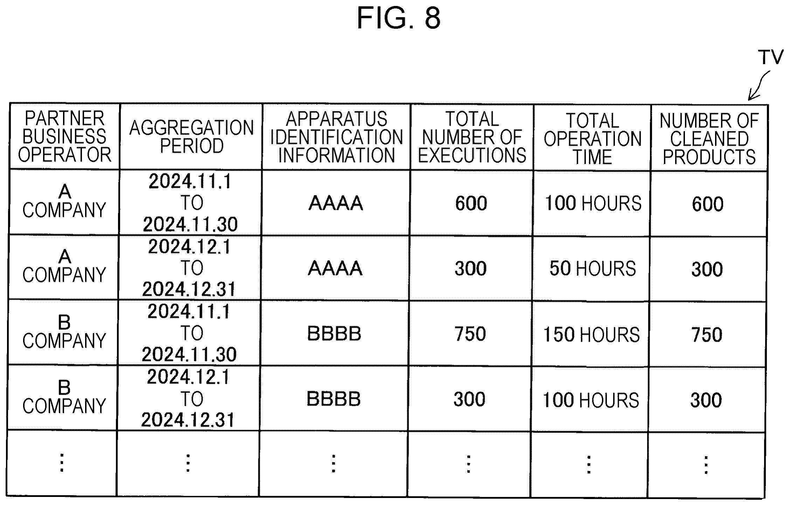

FIG. 8 is a conceptual diagram of a business operator management table TV. For example, in the business operator management table TV, the apparatus identification information of the cleaning control apparatus 200 corresponding to the cleaning apparatus 100 used for cleaning the used ink storage container IS, the operation status of the cleaning operation, and the number of cleaned ink storage containers IS are stored for each specific period. In the example shown in FIG. 8, a total number of executions of the cleaning operation in the specific period and a total operation time of the cleaning operation in the specific period are stored as the operation status of the cleaning operation. The business operator management table TV may store information other than the above. For example, the business operator management table TV may store a type and a supply quantity of the member PT supplied to the partner business operator PA from the production business operator MA, a usage quantity of the member PT in the specific period, and a stock quantity of the member PT after the end of the specific period.

As shown in FIG. 6, the processor 310 functions as a permission signal transmission unit 311, a plan transmission unit 312, a classification unit 313, and a record management unit 314 by executing a program stored in the program storage unit 331. The processor 310 further functions as a number calculation unit 315, an alert output unit 316, a cost calculation unit 317, and an invoice recipient determination unit 318 by executing a program stored in the program storage unit 331.

The permission signal transmission unit 311 compares the apparatus identification information received from the identification information transmission unit 211 with the apparatus identification information stored in the identification information storage unit 332. When the apparatus identification information received from the identification information transmission unit 211 matches the apparatus identification information stored in the identification information storage unit 332, the permission signal transmission unit 311 allows the cleaning control apparatus 200 to permit the cleaning operation of the cleaning apparatus 100. When the cleaning operation of the cleaning apparatus 100 is permitted, the permission signal transmission unit 311 transmits, for example, an authentication code to the cleaning control apparatus 200.

The plan transmission unit 312 transmits the production plan to the cleaning control apparatus 200 and the refill control apparatus 600. The production plan is determined based on the various types of information shared from the user U and the partner business operator PA.

The classification unit 313 classifies the ink storage container IS on which the cleaning operation is executed in the specific period, as one of the genuine product of the own company, the genuine product of the other company, or the compatible product with reference to the classification storage unit 333. For example, when the product identification information acquired by the identification information acquisition unit 213 is included in the classification table stored in the classification storage unit 333, the classification unit 313 classifies the ink storage container IS as follows. In this case, the classification unit 313 classifies the ink storage container IS as any of the genuine product of the own company or the genuine product of the other company in accordance with the product identification information acquired by the identification information acquisition unit 213. Meanwhile, when the product identification information acquired by the identification information acquisition unit 213 is not included in the classification table stored in the classification storage unit 333, the classification unit 313 classifies the ink storage container IS as the compatible product. The classification unit 313 may specify the exterior of the ink storage container IS by acquiring a detection result from a detection device, not shown, provided in the cleaning apparatus 100 and classify the ink storage container IS with reference to the features of the exterior of the ink storage container IS stored in the classification storage unit 333. The detection device is a device that can capture the exterior of the ink storage container IS, and is, for example, an imaging device such as a camera or a sensor such as a laser displacement sensor.

The record management unit 314 manages the cleaning record of the ink storage container IS by storing the various types of information received from the cleaning control apparatus 200 in the record storage unit 334. When the record management unit 314 receives the product identification information from the identification information acquisition unit 213, the record management unit 314 executes the following process. This process is based on the genuine product of the own company of which the identification information can be specified. In this case, the record management unit 314 transmits or adds the number of reuses corresponding to the product identification information received from the identification information acquisition unit 213 to the cleaning control apparatus 200 in the product management table TP stored in the record storage unit 334. Accordingly, the record management unit 314 manages the number of reuses of the ink storage container IS.

For the operation status of the cleaning operation received from the operation status transmission unit 215, the record management unit 314 executes the following process. The record management unit 314 stores the operation status of the cleaning operation received from the operation status transmission unit 215 in the product management table TP stored in the record storage unit 334. Accordingly, the record management unit 314 manages the operation status of the cleaning operation. In the genuine product of the own company, the operation status of the cleaning operation may be stored in association with the product identification information.

When the used member information is received from the operation status transmission unit 215 together with the product identification information, the record management unit 314 executes the following process. In this case, the record management unit 314 stores the used member information in association with the product identification information received from the operation status transmission unit 215 in the product management table TP stored in the record storage unit 334. Accordingly, the record management unit 314 manages the member PT used for cleaning the ink storage container IS. By doing so, the record management unit 314 manages the cleaning record of the ink storage container IS for each of the products NP and RP.

When the specific period has elapsed, the record management unit 314 executes the following process. In this case, the record management unit 314 generates the business operator management table TV based on the product management table TP stored in the record storage unit 334 and a calculation result of the number calculation unit 315. Accordingly, the cleaning record of the ink storage container IS such as the number of executions and the operation time of the cleaning operation in the specific period, the number of cleaned ink storage containers IS calculated from the number of executions and the operation time, and the usage quantity and the stock quantity of the member PT is managed for each partner business operator PA.

The record management unit 314 further manages the production record of the refill product RP by storing the various types of information received from the refill control apparatus 600 in the record storage unit 334, in the same manner as the above process related to the cleaning system 10.

The number calculation unit 315 calculates the number of cleaned ink storage containers IS in the specific period using at least any of the number of executions or the operation time of the cleaning operation in the specific period received from the operation status transmission unit 215. That is, the number calculation unit 315 estimates the number of cleaned ink storage containers IS from the operation status of the cleaning operation.

The alert output unit 316, in a predetermined case, outputs an alert by displaying an alert screen on a display screen of the management apparatus 300 or generating an alert sound from the audio generation device of the management apparatus 300. In the present embodiment, when the ink storage container IS on which the cleaning operation is executed is classified as the compatible product, the alert output unit 316 outputs the alert. It is also conceivable to clean an imitation product which is not legally allowed. Thus, the alert output unit 316 may output the alert even when the cleaning operation is executed on the imitation product.

The cost calculation unit 317 calculates the cleaning cost CC of the ink storage container IS in the specific period based on a specific quantity correlated with the operation status of the cleaning operation, such as the number of cleaned ink storage containers IS. The cost calculation unit 317 calculates the cleaning cost CC using, for example, a calculation formula prepared in advance. For example, the calculation formula includes the cleaning cost CC as an objective variable and the specific quantity that changes in accordance with the operation status of the cleaning operation as an explanatory variable. The calculation formula may include the following terms. The calculation formula may include, for example, a term of multiplying a unit price of the cleaning cost CC of the ink storage container IS by the number of cleaned ink storage containers IS calculated by the number calculation unit 315. The cost calculation unit 317 may calculate the cleaning cost CC with reference to a billing table showing the cleaning cost CC corresponding to the specific quantity, instead of the calculation formula prepared in advance. In the present embodiment, the cost calculation unit 317 calculates each of a cleaning cost of an own company product that is the cleaning cost CC corresponding to the operation status of the cleaning operation for the genuine product of the own company, and a cleaning cost of another company product that is the cleaning cost CC corresponding to the operation status of the cleaning operation for the genuine product of the other company. The cleaning cost of the own company product includes, for example, a labor cost of an employee who cleans the ink storage container IS in the business facility of the partner business operator PA. The cleaning cost of the own company product may include costs of light, heat, and water necessary for the operation of the cleaning apparatus 100 and the cleaning control apparatus 200. The cleaning cost of the other company product includes, for example, a cost of the member PT used in the cleaning operation for the genuine product of the other company. The cleaning cost of the other company product may include a usage fee for the apparatuses 100 and 200 lent to the partner business operator PA from the production business operator MA or a license usage fee for a brand logo, a patent, and the like of the production business operator MA. In the billing table, for example, different usage fees for the cleaning apparatus 100 may be set in accordance with each of the cleaning operation for the genuine product of the own company and the cleaning operation for the genuine product of the other company.

When the ink storage container IS on which the cleaning operation is executed is classified as the genuine product, the invoice recipient determination unit 318 determines an invoice recipient of the cleaning cost CC in accordance with the classification of the ink storage container IS. Specifically, when the ink storage container IS on which the cleaning operation is executed is classified as the genuine product of the own company, the invoice recipient determination unit 318 determines that the ink storage container IS is cleaned within a scope of outsourcing based on the partnership agreement, and determines that the invoice recipient of the cleaning cost CC is the production business operator MA. Accordingly, the production business operator MA pays the cleaning cost of the own company product to the partner business operator PA. Meanwhile, when the ink storage container IS on which the cleaning operation is executed is classified as the genuine product of the other company, the invoice recipient determination unit 318 determines that the cleaning is performed outside the scope of outsourcing based on the partnership agreement, and determines that the invoice recipient of the cleaning cost CC is the partner business operator PA. Accordingly, the production business operator MA collects the cleaning cost of the other company product from the partner business operator PA by sending an invoice for the cleaning cost of the other company product to the partner business operator PA. When it is determined that the cleaning operation is performed on the compatible product, an invoice for a cleaning cost of the compatible product may be sent to the partner business operator PA based on a different fee system.

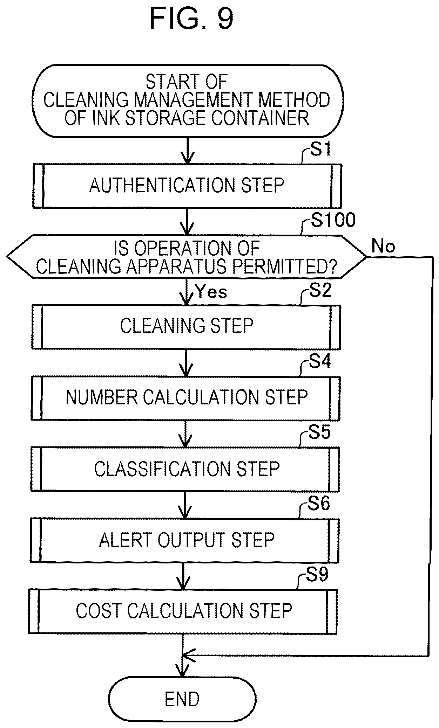

FIG. 9 is a flowchart showing a cleaning management method for the ink storage container IS in the first embodiment. The cleaning management method is executed when the used ink storage container IS is cleaned. In the cleaning management method, first, an authentication step in step S1 is executed. In the authentication step, the management apparatus 300 determines whether or not the cleaning apparatus 100 is operable. When step S100 results in "No", that is, when the operation of the cleaning apparatus 100 is not permitted by the cleaning apparatus 100, the present flow is finished without cleaning the ink storage container IS. When step S100 results in "Yes", that is, when the operation of the cleaning apparatus 100 is permitted by the management apparatus 300, a cleaning step in step S2 is executed. In the cleaning step, the used ink storage container IS is cleaned until the number of cleaned ink storage containers IS reaches the scheduled cleaning quantity. When the number of cleaned ink storage containers IS reaches the scheduled cleaning quantity, a number calculation step in step S4 is executed. In the number calculation step, the number of cleaned ink storage containers IS is calculated as the specific quantity. After the number calculation step, a classification step in step S5 is executed. In the classification step, the ink storage container IS on which the cleaning operation is executed in the specific period is classified. The number calculation step and the classification step may be executed in any order. After the number calculation step and the classification step, an alert output step in step S6 is executed. In the alert output step, the alert is output when a predetermined condition is satisfied. Lastly, a cost calculation step in step S9 is executed. In the cost calculation step, the cleaning cost CC in the specific period is calculated based on the specific quantity, and the invoice recipient of the cleaning cost CC is determined.

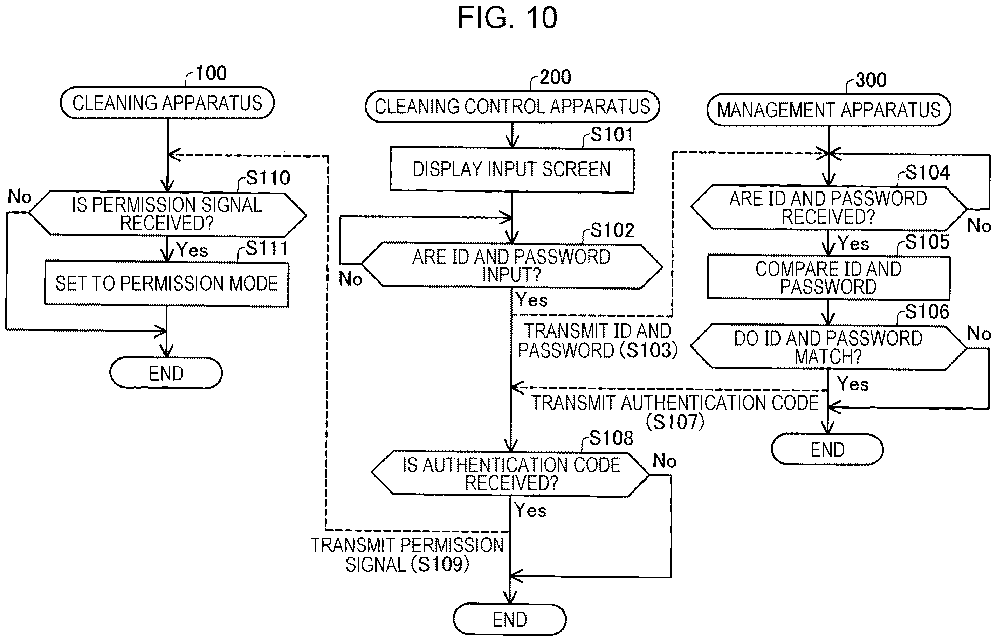

FIG. 10 is a flowchart showing details of the authentication step in the first embodiment. For example, the authentication step starts when an operation of requesting the operation of the cleaning apparatus 100, such as powering the cleaning apparatus 100 on, is executed by the partner business operator PA. FIG. 10 illustrates a case where the production business operator MA has signed a partnership agreement with a plurality of partner business operators PA, and different IDs and passwords are assigned to the plurality of partner business operators PA as the apparatus identification information from the production business operator MA.

In step S101, the identification information transmission unit 211 of the cleaning control apparatus 200 displays an input screen for the partner business operator PA to input the ID and the password on the display device of the cleaning control apparatus 200. When step S102 results in "Yes", that is, when the ID and the password are input by the partner business operator PA via the input device 260, step S103 is executed. In step S103, the identification information transmission unit 211 of the cleaning control apparatus 200 transmits the input ID and password to the management apparatus 300. When step S104 results in "Yes", that is, when the management apparatus 300 receives the ID and the password from the cleaning control apparatus 200, step S105 is executed. In step S105, the permission signal transmission unit 311 of the management apparatus 300 compares the ID and the password received from the identification information transmission unit 211 of the cleaning control apparatus 200 with the ID and the password stored in the identification information storage unit 332 of the management apparatus 300.

When step S106 results in "Yes", that is, when the ID and the password received from the identification information transmission unit 211 of the cleaning control apparatus 200 match the ID and the password stored in the identification information storage unit 332 of the management apparatus 300, step S107 is executed. In step S107, the permission signal transmission unit 311 of the management apparatus 300 determines that the cleaning operation of the cleaning apparatus 100 can be permitted during the partnership agreement period, and transmits the authentication code to the cleaning control apparatus 200. When step S108 results in "Yes", that is, when the cleaning control apparatus 200 receives the authentication code within a predetermined time after transmitting the ID and the password to the management apparatus 300, step S109 is executed. In step S109, the operation control unit 214 of the cleaning control apparatus 200 determines that the operation of the cleaning apparatus 100 is permitted by the management apparatus 300, and transmits, to the cleaning apparatus 100, a permission signal for switching the operation mode of the operation execution device 110 from the prohibition mode to the permission mode. When step S110 results in "Yes", that is, when the cleaning apparatus 100 receives the permission signal, the operation mode of the operation execution device 110 is set to the permission mode in step S111. Accordingly, the operation mode of the cleaning apparatus 100 is switched from the prohibition mode to the permission mode, and the cleaning apparatus 100 enters a state where the cleaning operation can be executed.

When step S106 results in "No", that is, when the ID and the password received from the identification information transmission unit 211 of the cleaning control apparatus 200 do not match the ID and the password stored in the identification information storage unit 332 of the management apparatus 300, the following process is executed. In this case, the permission signal transmission unit 311 of the management apparatus 300 determines that the cleaning operation of the cleaning apparatus 100 cannot be permitted outside the partnership agreement period, and finishes the present flow without transmitting the authentication code to the cleaning control apparatus 200. When step S108 results in "No", that is, when the cleaning control apparatus 200 does not receive the authentication code within the predetermined time after transmitting the ID and the password to the management apparatus 300, the following process is executed. In this case, the operation control unit 214 of the cleaning control apparatus 200 determines that the operation of the cleaning apparatus 100 is not permitted by the management apparatus 300, and finishes the present flow without transmitting the permission signal to the cleaning apparatus 100. Accordingly, the operation mode of the operation execution device 110 remains as the prohibited mode, and the state where the cleaning operation cannot be executed continues.

The authentication code for permitting the cleaning operation of the cleaning apparatus 100 may be periodically updated. The authentication step may be executed again in a specific case such as when communication between the cleaning control apparatus 200 and the management apparatus 300 is interrupted, or when a predetermined time elapses after the operation of the cleaning apparatus 100 stops. By doing so, functions of the cleaning system 10 in using the network N2 can be improved. For example, unauthorized access can be easily excluded.

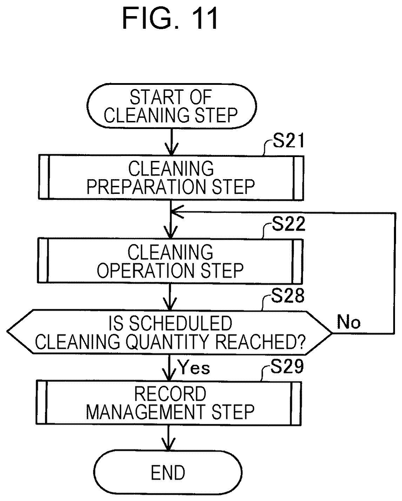

FIG. 11 is a flowchart showing details of the cleaning step in the first embodiment. The cleaning step starts when the operation of the cleaning apparatus 100 is permitted by the management apparatus 300. In the cleaning step, first, a cleaning preparation step in step S21 is executed. In the cleaning preparation step, preparation for starting to clean the ink storage container IS, such as acquisition of the production plan, is performed. After the cleaning preparation step, a cleaning operation step in step S22 is executed. In the cleaning operation step, the cleaning operation is executed by the cleaning apparatus 100, and the used ink storage container IS is cleaned. The cleaning operation step may include, for example, exterior inspection for inspecting the quality of the ink storage container IS. The operation status of the cleaning operation is shared with the management apparatus 300, as appropriate. The cleaning operation step is repeatedly executed until the number of cleaned ink storage containers IS reaches the scheduled cleaning quantity. When step S28 results in "Yes", that is, when the number of cleaned ink storage containers IS reaches the scheduled cleaning quantity, a record management step in step S29 is executed. In the record management step, the operation status of the cleaning operation in the specific period is aggregated.

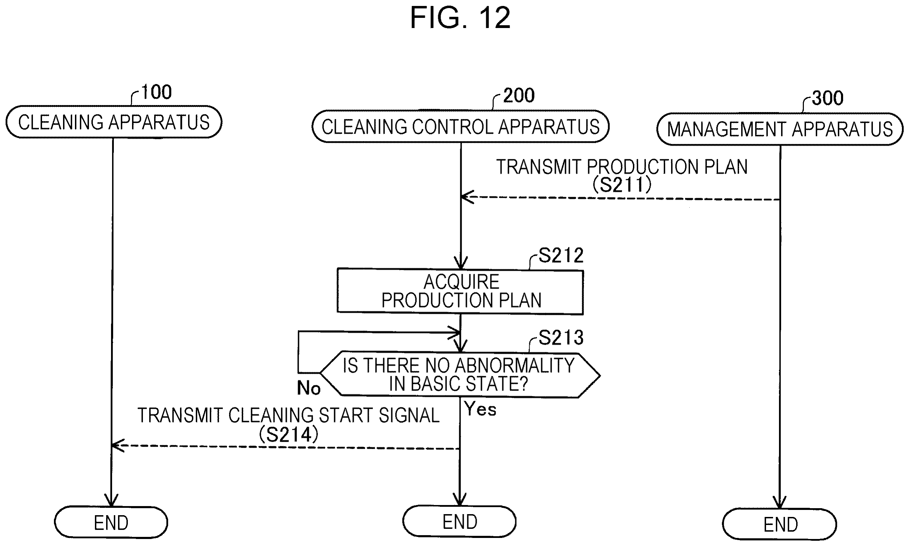

FIG. 12 is a flowchart showing details of the cleaning preparation step in the first embodiment. For example, the cleaning preparation step starts when the operation mode of the operation execution device 110 is set to the permission mode. In step S211, the plan transmission unit 312 of the management apparatus 300 transmits the production plan including the scheduled cleaning quantity to the cleaning control apparatus 200. In step S212, the plan acquisition unit 212 of the cleaning control apparatus 200 acquires the production plan including the scheduled cleaning quantity from the management apparatus 300. When step S213 results in "Yes", that is, when there is no abnormality in a basic state of the cleaning apparatus 100, step S214 is executed. The basic state of the cleaning apparatus 100 means, for example, whether or not error related to the cleaning operation is present. In step S214, the operation control unit 214 of the cleaning control apparatus 200 transmits a cleaning start signal for starting to clean the ink storage container IS to the cleaning apparatus 100. An operation of checking the basic state may be automatically performed by the cleaning system 10 or manually performed by the partner business operator PA.

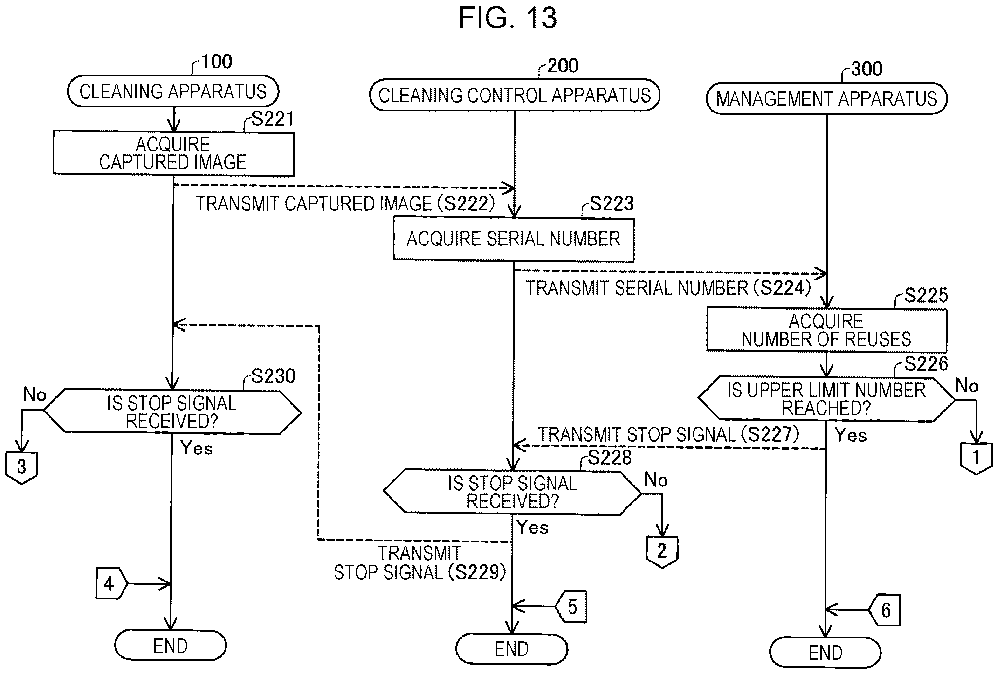

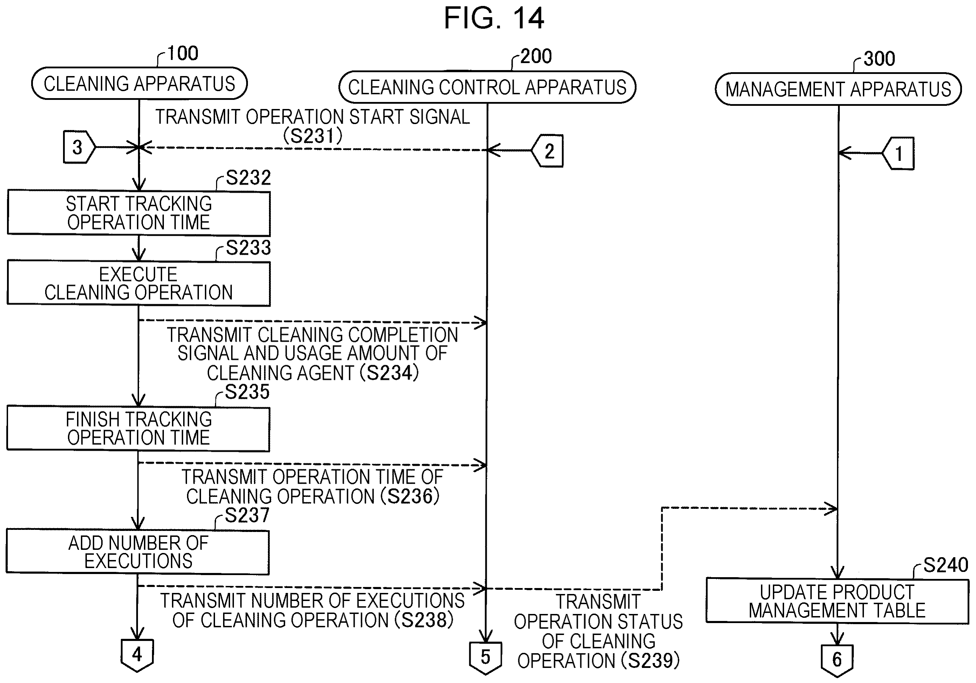

FIG. 13 is a first flowchart showing details of the cleaning operation step in the first embodiment. FIG. 14 is a second flowchart showing details of the cleaning operation step in the first embodiment. For example, the cleaning operation step starts when the cleaning apparatus 100 receives the cleaning start signal from the cleaning control apparatus 200.

As shown in FIG. 13, in step S221, the reading device 120 of the cleaning apparatus 100 images a label attached to or printed on the ink storage container IS set in the cleaning apparatus 100. Accordingly, the reading device 120 acquires the captured image including the code storing a serial number of the ink storage container IS. In step S222, the reading device 120 transmits the acquired captured image to the cleaning control apparatus 200. In step S223, the identification information acquisition unit 213 of the cleaning control apparatus 200 acquires the serial number of the ink storage container IS set in the cleaning apparatus 100 by decoding the code in the captured image. In step S224, the identification information acquisition unit 213 transmits the acquired serial number to the management apparatus 300. In step S225, the record management unit 314 of the management apparatus 300 acquires the number of reuses of the ink storage container IS specified by the serial number acquired from the cleaning control apparatus 200 with reference to the product management table TP stored in the record storage unit 334.

When step S226 results in "Yes", that is, when the acquired number of reuses reaches a predetermined upper limit number, step S227 is executed. In step S227, the record management unit 314 transmits a stop signal for stopping the cleaning operation for the ink storage container IS set in the cleaning apparatus 100 to the cleaning control apparatus 200, and finishes the present flow. When step S228 results in "Yes", that is, when the cleaning control apparatus 200 receives the stop signal within a predetermined time after transmitting the serial number, step S229 is executed. In step S229, the operation control unit 214 of the cleaning control apparatus 200 transmits the stop signal for stopping the cleaning operation for the ink storage container IS set in the cleaning apparatus 100 to the cleaning apparatus 100, and finishes the present flow. When step S230 results in "Yes", that is, when the cleaning apparatus 100 receives the stop signal, the cleaning apparatus 100 finishes the present flow without driving the operation execution device 110. The purpose of this operation is to maintain cleaning quality and the like of the ink storage container IS and sell only the ink storage container IS free of quality deterioration on the market.

When step S226 results in "No", that is, when the acquired number of reuses does not reach the upper limit number, step S228 results in "No". When step S228 results in "No", that is, when the cleaning control apparatus 200 does not receive the stop signal within the predetermined time after transmitting the serial number, step S231 shown in FIG. 14 is executed. In step S231, the operation control unit 214 of the cleaning control apparatus 200 transmits an operation start signal for starting the cleaning operation to the cleaning apparatus 100. The timer 132 of the cleaning apparatus 100 that has received the operation start signal starts tracking the operation time of the cleaning operation in step S232. The operation execution device 110 of the cleaning apparatus 100 that has received the operation start signal executes the cleaning operation in step S233. In the cleaning operation, for example, the operation execution device 110 opens a valve that switches communication between the inside and the outside of the ink storage container IS, to eject the cleaning agent DG to the inside of the ink storage container IS from the valve. The operation execution device 110 cleans the inside of the ink storage container IS by discharging the ejected cleaning agent DG from the valve. When the cleaning operation is completed, the operation execution device 110 transmits a cleaning completion signal indicating the completion of the cleaning operation to the cleaning control apparatus 200 together with the usage amount of the cleaning agent DG in step S234. When the cleaning operation is completed, the timer 132 finishes tracking the operation time of the cleaning operation in step S235. In step S236, the timer 132 transmits the operation time of the cleaning operation to the cleaning control apparatus 200. When the cleaning operation is completed, the counter 131 of the cleaning apparatus 100 adds one to the number of executions of the cleaning operation in step S237. This addition may be performed for only the genuine product from which the product identification information can be read. In step S238, the counter 131 transmits the number of executions of the cleaning operation to the cleaning control apparatus 200. In step S239, the operation status transmission unit 215 of the cleaning control apparatus 200 sets the number of executions and the operation time of the cleaning operation and the usage amount of the cleaning agent DG as the operation status of the cleaning operation, and transmits the operation status to the management apparatus 300. The record management unit 314 of the management apparatus 300 that has acquired the operation status of the cleaning operation stores the operation status of the cleaning operation in the product management table TP stored in the record storage unit 334 in step S240. The record management unit 314 adds one to the number of reuses corresponding to the serial number of the cleaned ink storage container IS. Accordingly, the record management unit 314 updates the product management table TP.

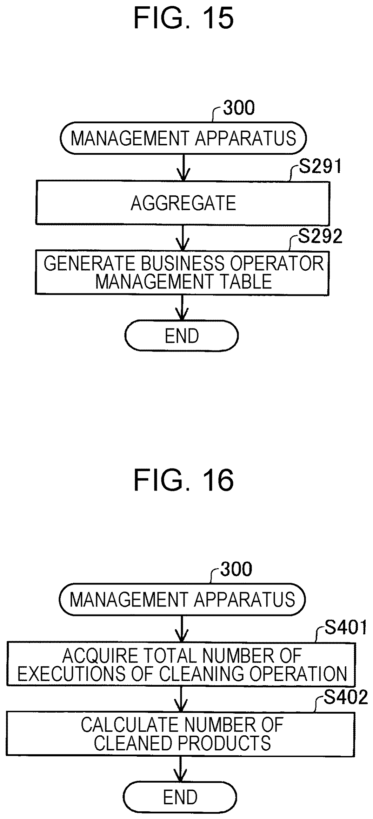

FIG. 15 is a flowchart showing details of the record management step in the first embodiment. For example, the record management step starts when the number of cleaned ink storage containers IS reaches the scheduled cleaning quantity. In step S291, the record management unit 314 of the management apparatus 300 aggregates the number of executions and the operation time of the cleaning operation and the usage quantity of the member PT with reference to the product management table TP stored in the record storage unit 334. In step S292, the record management unit 314 generates the business operator management table TV by segmenting an aggregation result for each specific period.

FIG. 16 is a flowchart showing details of the number calculation step in the first embodiment. For example, the number calculation step starts when the cleaning step is finished. In step S401, the number calculation unit 315 of the management apparatus 300 acquires the total number of executions of the cleaning operation in the specific period. In step S402, the number calculation unit 315 calculates the number of cleaned ink storage containers IS using the total number of executions of the cleaning operation in the specific period. In step S401, the number calculation unit 315 may acquire the total operation time of the cleaning operation in the specific period. In this case, in step S402, the number calculation unit 315 calculates the number of cleaned ink storage containers IS using the total operation time of the cleaning operation in the specific period.

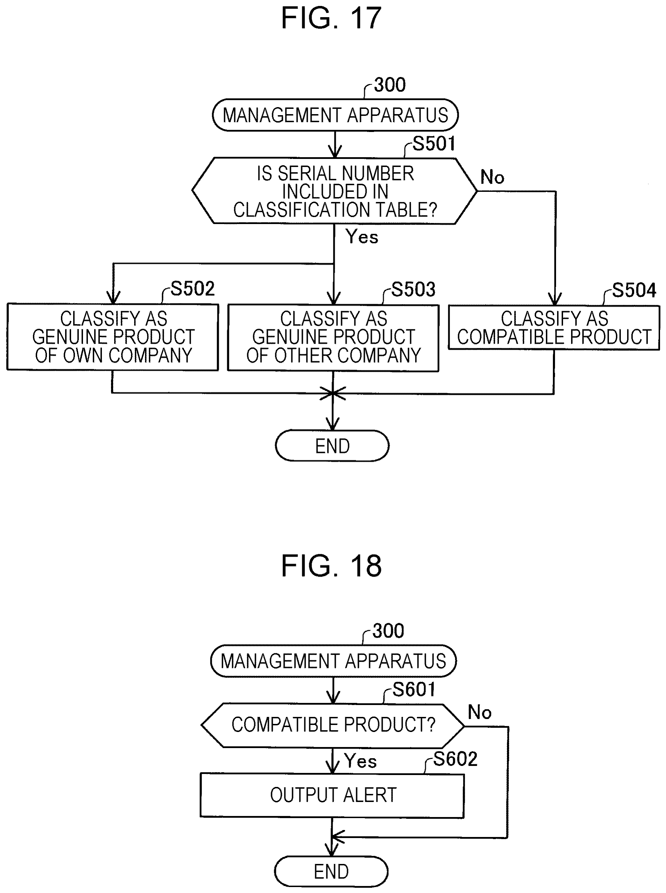

FIG. 17 is a flowchart showing details of the classification step in the first embodiment. For example, the classification step starts when the number calculation step is finished. When step S501 results in "Yes", that is, when the serial number of the ink storage container IS on which the cleaning operation is executed in the specific period is included in the classification table stored in the classification storage unit 333, step S502 is executed. In steps S502 and S503, the classification unit 313 of the management apparatus 300 classifies the ink storage container IS on which the cleaning operation is executed as any of the genuine product of the own company or the genuine product of the other company in accordance with the serial number. When step S501 results in "No", that is, when the serial number of the ink storage container IS on which the cleaning operation is executed in the specific period is not included in the classification table stored in the classification storage unit 333, step S504 is executed. In step S504, the classification unit 313 classifies the ink storage container IS on which the cleaning operation is executed as the compatible product.

FIG. 18 is a flowchart showing details of the alert output step in the first embodiment. For example, the alert output step starts when both of the number calculation step and the classification step are finished. When step S601 results in "Yes", that is, when the ink storage container IS on which the cleaning operation is executed in the specific period is classified as the compatible product, step S602 is executed. In step S602, the alert output unit 316 determines that there is a probability that unauthorized activity of cleaning the compatible product is performed in the partner business operator PA, and outputs the alert via the notification device 370. When step S601 results in "No", that is, when the ink storage container IS on which the cleaning operation is executed in the specific period is classified as the genuine product, the alert output unit 316 performs the following process. In this case, the alert output unit 316 determines that the probability that unauthorized activity of cleaning the compatible product is performed in the partner business operator PA is low, and finishes the present flow without outputting the alert. The alert may be output not only in the classification of the compatible product but also, for example, when the genuine product of the other company with which the agreement is not signed is cleaned, or when the imitation product is cleaned.

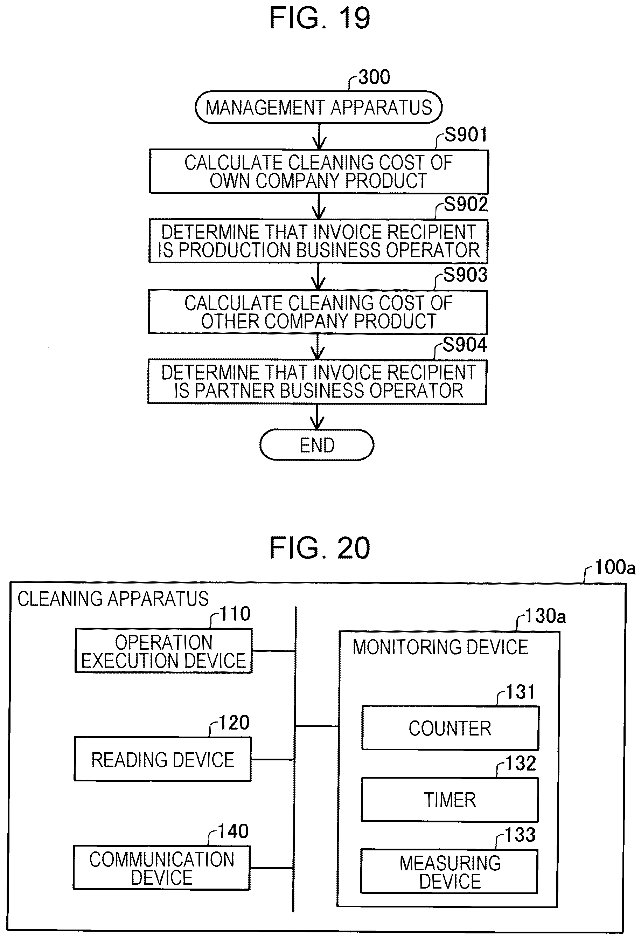

FIG. 19 is a flowchart showing details of the cost calculation step in the first embodiment. For example, the cost calculation step starts when both of the number calculation step and the classification step are finished. In step S901, the cost calculation unit 317 of the management apparatus 300 substitutes, in the calculation formula, the number of cleaned ink storage containers IS classified as the genuine product of the own company from the number of cleaned ink storage containers IS calculated in the number calculation step. Accordingly, the cost calculation unit 317 calculates the cleaning cost of the own company product. In step S902, the invoice recipient determination unit 318 of the management apparatus 300 determines that the invoice recipient of the cleaning cost of the own company product is the production business operator MA. In step S903, the cost calculation unit 317 substitutes, in the calculation formula, the number of cleaned ink storage containers IS classified as the genuine product of the other company from the number of cleaned ink storage containers IS calculated in the number calculation step. Accordingly, the cost calculation unit 317 calculates the cleaning cost of the other company product. In step S904, the invoice recipient determination unit 318 determines that the invoice recipient of the cleaning cost of the other company product is the partner business operator PA. It may be determined that the invoice recipient of the cleaning cost CC when the compatible product is cleaned is also the partner business operator PA.

According to the first embodiment, the used ink storage container IS is cleaned in the first country C1, exported from the first country C1 to the second country C2, and remanufactured as the refill product RP in the second country C2. In this case, in the above aspect, when the apparatus identification information received from the cleaning control apparatus 200 lent to the partner business operator PA matches the apparatus identification information stored in the management apparatus 300 owned by the production business operator MA, the cleaning operation of the cleaning apparatus 100 lent to the partner business operator PA is permitted. Accordingly, the production business operator MA can cause the partner business operator PA to clean the used ink storage container IS only when the partner business operator PA has signed the partnership agreement with the production business operator MA. That is, the production business operator MA can cause the partner business operator PA to clean the used ink storage container IS under management of the production business operator MA using the networks N1 and N2. In such an aspect, by causing the production business operator MA to manage the partner business operator PA in accordance with an environmental convention, the ink storage container IS complying with the environmental convention can be exported from the first country C1 to the second country C2, and the refill product RP can be produced in the second country C2.

According to the first embodiment, the location of the user U who uses the products NP and RP, and the business facility of the partner business operator PA that cleans the used ink storage container IS collected from the user U are present in the first country C1. In such an aspect, the collected ink storage container IS can be quickly cleaned in the first country C1. In another embodiment, the location of the user U and the business facility of the partner business operator PA may be present in different countries.

According to the first embodiment, the production business operator MA can produce the refill product RP using the cleaned ink storage container IS. In such an aspect, burden of the production business operator MA necessary for collecting and cleaning the used ink storage container IS can be reduced. Furthermore, the refill product RP can be produced without supplying a large amount of the member used for producing the refill product RP, such as the ink IN, the accessory AS, and the packaging material PM, to the first country C1. Accordingly, the amount of the member PT and the like supplied to the first country C1 can be minimized. Thus, a transportation cost of the member used for producing the refill product RP can be reduced.

According to the first embodiment, in the cleaning system 10, the partner business operator PA cleans the ink storage container IS via the cleaning apparatus 100 lent from the production business operator MA using a cleaning method designated by the production business operator MA using the member PT supplied from the production business operator MA. In such an aspect, when the cleaned ink storage container IS is exported from the first country C1 to the second country C2, a probability of causing a state of non-compliance with the environmental convention can be reduced.

According to the first embodiment, in the cleaning system 10, the management apparatus 300 owned by the production business operator MA can manage the operation of the cleaning apparatus 100 by communicating with the cleaning control apparatus 200 lent to the partner business operator PA via the network N2. In such an aspect, even when the partner business operator PA present in the first country C1 at a distance cleans the ink storage container IS, the production business operator MA can easily manage the cleaning of the ink storage container IS by the partner business operator PA in the second country C2. Accordingly, the cleaning system 10 can be widely used in areas where the ink storage container IS is consumed around the world.

According to the first embodiment, in the cleaning system 10, the management apparatus 300 owned by the production business operator MA can communicate with the printing apparatus 900 owned by the user U and the cleaning control apparatus 200 lent to the partner business operator PA via the networks N1 and N2. Accordingly, the production business operator MA can acquire various types of information such as the usage status of the printing apparatus 900 from the user U or acquire various types of information such as the collection status of the ink storage container IS from the partner business operator PA. In such an aspect, the production business operator MA can determine the provision quantity and the provision time of the refill product RP to be provided to the user U from the partner business operator PA and create the production plan for the refill product RP based on the various types of information shared from the user U and the partner business operator PA. Accordingly, the production business operator MA can supply the member PT of an appropriate quantity to the partner business operator PA at an appropriate time in accordance with the production plan. The partner business operator PA can clean the ink storage container IS in accordance with the production plan acquired via the network N2 and provide the cleaned ink storage container IS to the production business operator MA. Accordingly, by producing the refill product RP in accordance with the predetermined production plan, the production business operator MA can provide the refill product RP of the predetermined provision quantity to the user U at the predetermined provision time. Thus, the production business operator MA can provide an appropriate number of refill products RP to the user U at an appropriate time.

According to the first embodiment, in the record storage unit 334 of the management apparatus 300, the product identification information is stored in association with the number of reuses of the ink storage container IS. In such an aspect, when the number of reuses of the ink storage container IS reaches the upper limit number, the management apparatus 300 can stop the cleaning operation of the cleaning apparatus 100 by, for example, transmitting the stop signal to the cleaning control apparatus 200. Accordingly, a probability that the number of reuses of the ink storage container IS exceeds the upper limit number can be reduced. When the number of reuses of the ink storage container IS reaches the upper limit number, the management apparatus 300 may output the alert. Even in such an aspect, the probability that the number of reuses of the ink storage container IS exceeds the upper limit number can be reduced.

According to the first embodiment, the cleaning system 10 can classify the used ink storage container IS as any one of the genuine product of the own company, the genuine product of the other company, or the compatible product. In such an aspect, the production business operator MA can change the process in cleaning the ink storage container IS in accordance with the classification of the ink storage container IS. For example, when the cleaning operation is scheduled to be executed on the compatible product, the management apparatus 300 may stop the cleaning operation for the compatible product that is not intended by the production business operator MA by, for example, transmitting the stop signal to the cleaning control apparatus 200. In such an aspect, the production business operator MA can prevent the cleaning apparatus 100 and the cleaning control apparatus 200 from being used for cleaning the compatible product. The management apparatus 300 may calculate the cleaning cost of the compatible product that is the cleaning cost CC corresponding to the operation status of the cleaning operation for the compatible product. The cleaning cost of the compatible product includes, for example, the cost of the member PT used in the cleaning operation for the compatible product. The cleaning cost of the compatible product may include the usage fee for the apparatuses 100 and 200 lent to the partner business operator PA from the production business operator MA or the license usage fee for the brand logo, the patent, and the like of the production business operator MA. When the ink storage container IS on which the cleaning operation is executed is classified as the compatible product, the management apparatus 300 may determine that the cleaning is performed outside the scope of outsourcing based on the partnership agreement, and determine that the invoice recipient of the cleaning cost CC is the partner business operator PA. In such an aspect, the production business operator MA can collect the cleaning cost of the compatible product from the partner business operator PA by sending an invoice for the cleaning cost of the compatible product to the partner business operator PA. Accordingly, the production business operator MA can prevent unauthorized activity of the partner business operator PA. This applies to not only the cleaning operation for the compatible product but also the cleaning operation for the genuine product of the other company with which the agreement is not signed, and an invoice for the cleaning cost CC may be sent to the partner business operator PA.

According to the first embodiment, in the cleaning system 10, the operation status of the cleaning operation including at least one of the number of executions of the cleaning operation and the operation time of the cleaning operation is monitored in the cleaning apparatus 100 and is transmitted to the management apparatus 300 via the cleaning control apparatus 200. In such an aspect, the management apparatus 300 can mechanically calculate the number of cleaned ink storage containers IS using the operation status of the cleaning operation. Accordingly, the production business operator MA can easily identify the cleaning record of the ink storage container IS such as the number of cleaned ink storage containers IS from minimum necessary information such as the operation status of the cleaning operation.

According to the first embodiment, in the cleaning system 10, the operation status of the cleaning operation including at least one of the number of executions of the cleaning operation and the operation time of the cleaning operation is monitored in the cleaning apparatus 100 and is transmitted to the management apparatus 300 via the cleaning control apparatus 200. In such an aspect, the management apparatus 300 can calculate the cleaning cost CC in the specific period based on the specific quantity correlated with the operation status of the cleaning operation. Accordingly, by paying the calculated cleaning cost CC to the partner business operator PA, the production business operator MA can have the partner business operator PA clean the ink storage container IS on its behalf while preventing unauthorized activity of the partner business operator PA. The partner business operator PA can earn revenue by receiving the cleaning cost CC from the production business operator MA.

According to the first embodiment, the management apparatus 300 calculates each of the cleaning cost of the own company product and the cleaning cost of the other company product. When the ink storage container IS on which the cleaning operation is executed is classified as the genuine product of the own company, the management apparatus 300 determines that the invoice recipient of the cleaning cost of the own company product is the production business operator MA. In such an aspect, by causing the production business operator MA to pay the cleaning cost of the own company product to the partner business operator PA, the partner business operator PA can earn revenue corresponding to the cleaning of the genuine product of the own company. Meanwhile, when the ink storage container IS on which the cleaning operation is executed is classified as the genuine product of the other company, the management apparatus 300 determines that the invoice recipient of the cleaning cost of the other company product is the partner business operator PA. In such an aspect, the production business operator MA can collect the cleaning cost of the other company product from the partner business operator PA by sending an invoice for the cleaning cost of the other company product to the partner business operator PA. Accordingly, the production business operator MA can offset a cost related to the cleaning operation for the genuine product of the other company by receiving the cleaning cost of the other company product from the partner business operator PA while implementing environmental protection by continuing the cleaning of the ink storage container IS without interruption.

According to the first embodiment, when the ink storage container IS on which the cleaning operation is executed is classified as the compatible product, the management apparatus 300 can automatically output the alert. In such an aspect, the production business operator MA can quickly identify the probability that the compatible product is cleaned in the partner business operator PA. This can be useful in the process corresponding to the classification of the ink storage container IS, such as stopping the cleaning operation for the compatible product, calculating the cleaning cost of the compatible product, and determining the invoice recipient.

According to the first embodiment, the partner business operator PA can borrow the cleaning apparatus 100 and the cleaning control apparatus 200 from the production business operator MA free of charge by signing the partnership agreement with the production business operator MA. In such an aspect, the partner business operator PA can clean the ink storage container IS without the need for equipment investment for installing the cleaning apparatus 100 and the cleaning control apparatus 200. Furthermore, by enabling the cleaning apparatus 100 to be used for cleaning the genuine product of the other company with which the agreement is signed, cleaning business can expand efficiently.

According to the first embodiment, the partner business operator PA can be supplied with the member PT to be used for cleaning the ink storage container IS from the production business operator MA by signing the partnership agreement with the production business operator MA. In such an aspect, the partner business operator PA does not need to prepare the member PT to be used for cleaning the ink storage container IS. Thus, the partner business operator PA can clean the ink storage container IS without the need for production equipment or materials for producing the member PT.

The cleaning system 10 only needs to have a function of permitting the cleaning operation of the cleaning apparatus 100 when the apparatus identification information received from the cleaning control apparatus 200 matches the apparatus identification information stored in the management apparatus 300, and may not essentially have other functions.

### B. Second Embodiment

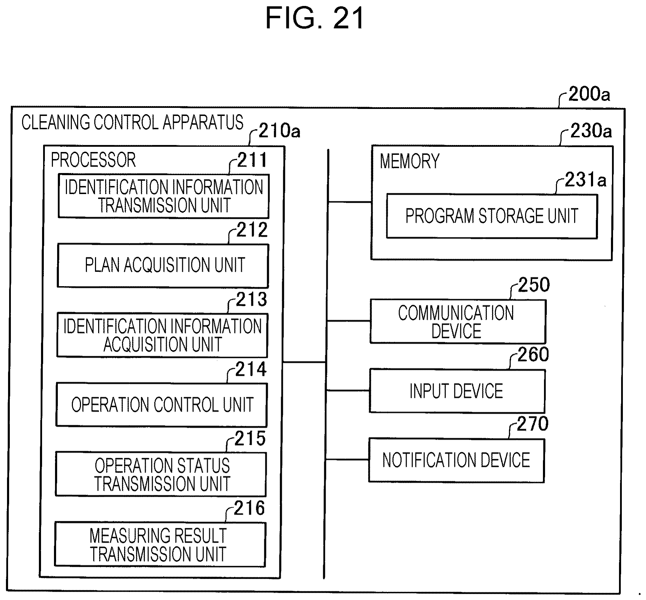

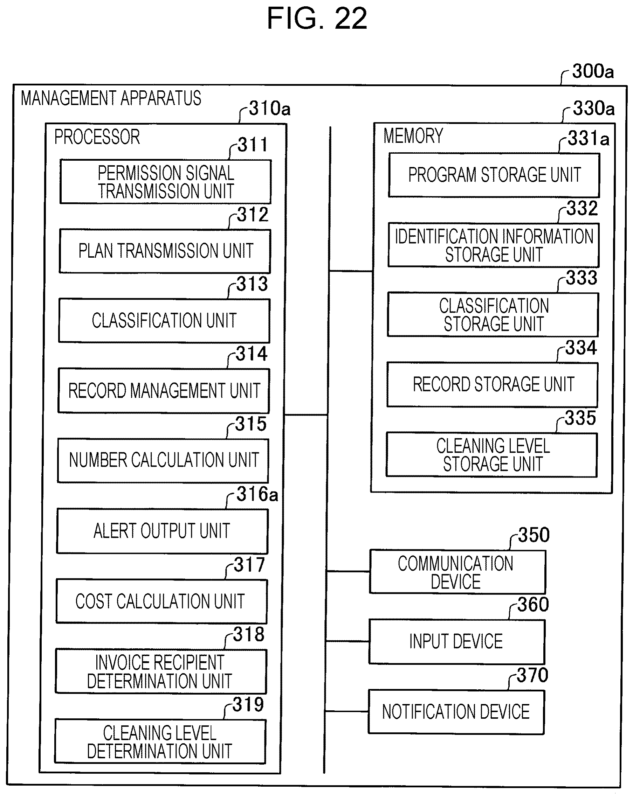

FIG. 20 is a block diagram showing a configuration of a cleaning apparatus 100a in a second embodiment. FIG. 21 is a block diagram showing a configuration of a cleaning control apparatus 200a in the second embodiment. FIG. 22 is a block diagram showing a configuration of a management apparatus 300a in the second embodiment. For example, when the ink storage container IS as an export target to be exported from the first country C1 to the second country C2 is made of plastic, the ink storage container IS may be determined to be plastic waste defined in HS code 3915 or the like depending on its cleaning level. When the ink storage container IS as the export target is determined to be plastic waste, the ink storage container IS may be a target regulated by the environmental convention such as the Basel Convention and may not be exportable from the first country C1 to the second country C2. Therefore, in the present embodiment, an alert is output in accordance with the cleaning level of the cleaned ink storage container IS. Other configurations are the same as those in the first embodiment. The same configurations as those in the first embodiment will be designated by the same reference numerals and will not be described.

As shown in FIG. 22, a memory 330a of the management apparatus 300a includes a program storage unit 331a, the identification information storage unit 332, the classification storage unit 333, the record storage unit 334, and a cleaning level storage unit 335.

The cleaning level storage unit 335 stores a threshold value of the cleaning level of the ink storage container IS complying with the environmental convention.

The processor 310a of the management apparatus 300a further functions as a cleaning level determination unit 319 and an alert output unit 316a by executing a program stored in the program storage unit 331a of the memory 330a.

The cleaning level determination unit 319 acquires the cleaning level of the cleaned ink storage container IS and determines whether or not the acquired cleaning level is greater than or equal to a predetermined cleaning level in accordance with the environmental convention. The cleaning level is, for example, a transparency level of the ink storage container IS. The cleaning level may be a coloring state of the ink storage container IS, a transmittance when the ink storage container IS is irradiated with light, or a purity such as a color and a pH of cleaning water when the ink storage container IS is cleaned. When the cleaning level of the ink storage container IS is defined as the transparency level or the coloring state of the ink storage container IS, the cleaning level determination unit 319, for example, acquires the cleaning level of the ink storage container IS by analyzing a captured image acquired by imaging the ink storage container IS via an imaging device. When the cleaning level of the ink storage container IS is defined as the transmittance of the ink storage container IS, the cleaning level determination unit 319, for example, acquires the cleaning level of the ink storage container IS by acquiring an output result of a sensor that can measure the transmittance, such as a haze meter. When the cleaning level of the ink storage container IS is defined as the color of the cleaning water, the cleaning level determination unit 319, for example, acquires the cleaning level of the ink storage container IS by acquiring an output result of a sensor that can measure the color of the cleaning water, such as a colorimeter or a spectrophotometer. When the cleaning level of the ink storage container IS is defined as the pH of the cleaning water, the cleaning level determination unit 319, for example, acquires the cleaning level of the ink storage container IS by acquiring an output result of a sensor that can measure the pH of the cleaning water, such as a pH meter.

When the cleaning level of the ink storage container IS is less than the predetermined cleaning level, the alert output unit 316a outputs the alert.

As shown in FIG. 20, a monitoring device 130a of the cleaning apparatus 100a further includes a measuring device 133 for acquiring the cleaning level of the cleaned ink storage container IS. The measuring device 133 is, for example, the imaging device that can image the exterior of the ink storage container IS, the sensor that can measure the transmittance of the ink storage container IS, or the sensor that can measure the pH or the color of the cleaning water.

As shown in FIG. 21, a processor 210a of the cleaning control apparatus 200a further functions as a measuring result transmission unit 216 by executing a program stored in a program storage unit 231a of a memory 230a. The measuring result transmission unit 216 transmits a measuring result of the measuring device 133 to the management apparatus 300a.

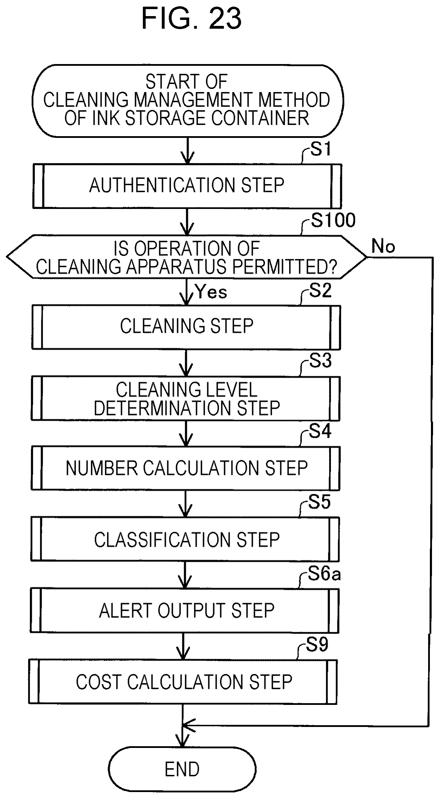

FIG. 23 is a flowchart showing a cleaning management method of the ink storage container IS in the second embodiment. In the present embodiment, a cleaning level determination step in step S3 is executed after the cleaning step. In the cleaning level determination step, whether or not the cleaning level of the cleaned ink storage container IS is greater than or equal to the predetermined cleaning level is determined. After the cleaning level determination step, an alert output step in step S6a is executed. In the alert output step, the alert is output in accordance with the cleaning level of the ink storage container IS.

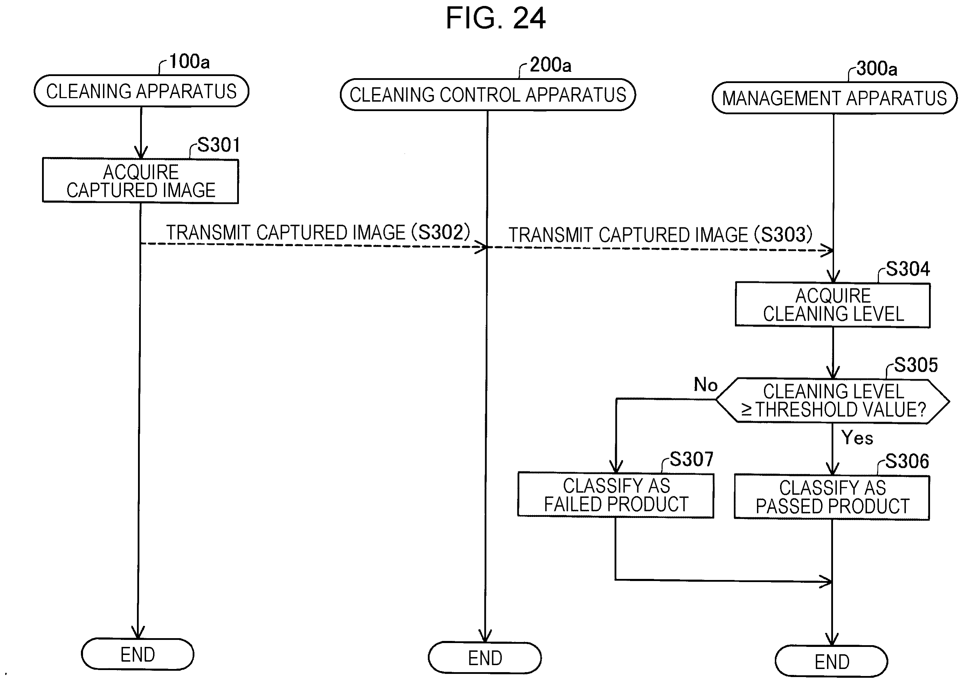

FIG. 24 is a flowchart showing details of a cleaning level determination method in the second embodiment. For example, the cleaning level determination step starts when the cleaning step is finished. In step S301, the imaging device that is the measuring device 133 of the cleaning apparatus 100 images the cleaned ink storage container IS. Accordingly, the measuring device 133 acquires the captured image including the cleaned ink storage container IS. In step S302, the measuring device 133 transmits the captured image to the cleaning control apparatus 200a. In step S303, the measuring result transmission unit 216 of the cleaning control apparatus 200a transmits the acquired captured image to the management apparatus 300. In step S304, the cleaning level determination unit 319 of the management apparatus 300a acquires the cleaning level of the ink storage container IS by analyzing the captured image. When step S305 results in "Yes", that is, when the cleaning level of the ink storage container IS is greater than or equal to the threshold value stored in the cleaning level storage unit 335, step S306 is executed. In step S306, the cleaning level determination unit 319 determines that the cleaning level of the ink storage container IS is greater than or equal to the predetermined cleaning level, and classifies the ink storage container IS as a passed product. When step S305 results in "No", that is, when the cleaning level of the ink storage container IS is less than the threshold value stored in the cleaning level storage unit 335, step S307 is executed. In step S307, the cleaning level determination unit 319 determines that the cleaning level of the ink storage container IS is less than the predetermined cleaning level, and classifies the ink storage container IS as a failed product.

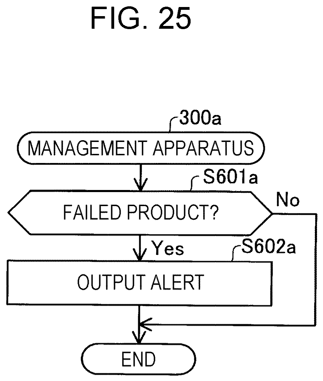

FIG. 25 is a flowchart showing details of the alert output step in the second embodiment. When step S601a results in "Yes", that is, when the cleaning level of the ink storage container IS is less than the predetermined cleaning level, and the ink storage container IS is classified as the failed product, step S602a is executed. In step S602a, the alert output unit 316a determines that there is a probability that the cleaning level of the ink storage container IS does not comply with the environmental convention, and outputs the alert via the notification device 370. When step S601a results in "No", that is, when the cleaning level of the ink storage container IS is greater than or equal to the predetermined cleaning level, and the ink storage container IS is classified as the passed product, the following process is executed. In this case, the cleaning level determination unit 319 determines that a probability that the cleaning level of the ink storage container IS complies with the environmental convention is high, and finishes the present flow without outputting the alert.

According to the second embodiment, the management apparatus 300a owned by the production business operator MA can acquire the cleaning level of the ink storage container IS and determine whether or not the cleaning level of the ink storage container IS is greater than or equal to the predetermined cleaning level. In such an aspect, the production business operator MA can manage the partner business operator PA after identifying the cleaning level of the ink storage container IS. Accordingly, the production business operator MA having a business facility in the second country C2 can import the ink storage container IS complying with the environmental convention from the first country C1.

According to the second embodiment, the management apparatus 300a can determine whether or not the cleaning level of the ink storage container IS is greater than or equal to the predetermined cleaning level in accordance with the environmental convention by comparing the cleaning level of the ink storage container IS acquired from the measuring result of the measuring device 133 with the threshold value of the cleaning level stored in the cleaning level storage unit 335. In such an aspect, whether or not the cleaning level of the ink storage container IS complies with the environmental convention can be easily determined.

According to the second embodiment, the alert can be output when the cleaning level of the ink storage container IS is less than the predetermined cleaning level. In such an aspect, when the cleaned ink storage container IS is exported from the first country C1 to the second country C2, the probability of causing the state of non-compliance with the environmental convention can be further reduced.

### C. Third Embodiment

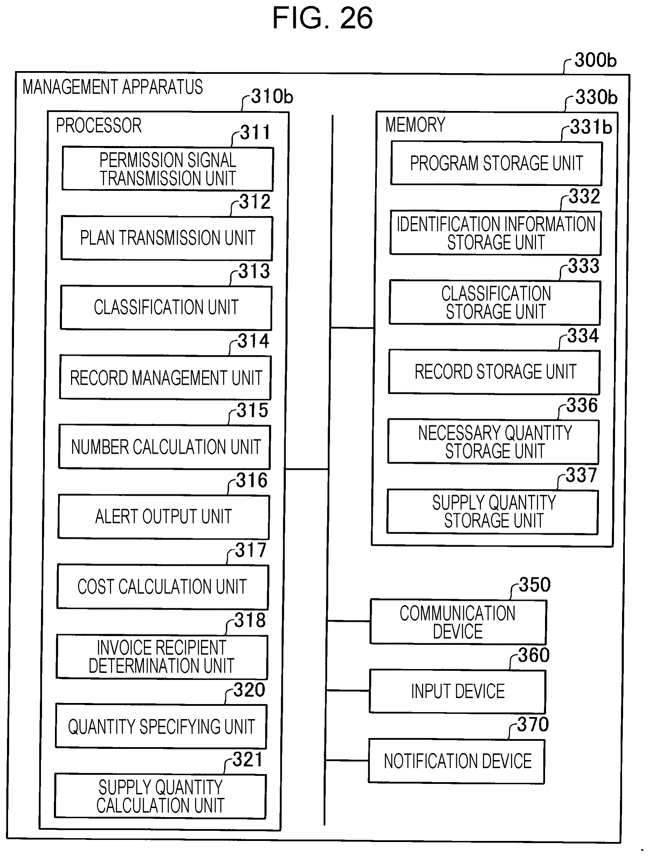

FIG. 26 is a block diagram showing a configuration of a management apparatus 300b in a third embodiment. As described above, the production business operator MA supplies the member PT to be used for cleaning the ink storage container IS to the partner business operator PA. To supply the member PT of a more appropriate quantity to the partner business operator PA at a more appropriate time, it is preferable that the production business operator MA can identify the usage quantity and the stock quantity of the member PT in the partner business operator PA. Therefore, in the present embodiment, the usage quantity of the member PT corresponding to the operation status of the cleaning operation is specified, and the quantity of the member PT to be newly supplied to the partner business operator PA is calculated. Other configurations are the same as those in the first embodiment. The same configurations as those in the first embodiment will be designated by the same reference numerals and will not be described.

A memory 330b of the management apparatus 300b includes a program storage unit 331b, the identification information storage unit 332, the classification storage unit 333, the record storage unit 334, a necessary quantity storage unit 336, and a supply quantity storage unit 337.

The necessary quantity storage unit 336 stores a necessary member quantity. The necessary member quantity is the quantity of the member PT necessary for cleaning the ink storage container IS. The necessary member quantity is correlated with at least one of the number of executions of the cleaning operation in the specific period and the operation time of the cleaning operation in the specific period. For example, the necessary quantity storage unit 336 stores, in advance, a correlation table showing the necessary member quantity corresponding to the operation status of the cleaning operation for each type of the member PT.

The supply quantity storage unit 337 stores the quantity of the member PT supplied from the production business operator MA to the partner business operator PA.

A processor 310b of the management apparatus 300b further functions as a quantity specifying unit 320 and a supply quantity calculation unit 321 by executing a program stored in the program storage unit 331b of the memory 330b.

The quantity specifying unit 320 specifies the quantity of the member PT used for cleaning the ink storage container IS based on the operation status of the cleaning operation received from the operation status transmission unit 215 and the necessary member quantity stored in the necessary quantity storage unit 336. That is, while this applies to the genuine product in principle, the other company product is also included when the agreement is signed with the other company. The quantity of the member PT specified by the quantity specifying unit 320 is the usage quantity of the member PT estimated from the operation status of the cleaning operation and the necessary member quantity. The quantity specifying unit 320, for example, acquires the necessary member quantity corresponding to the operation status of the cleaning operation received from the operation status transmission unit 215 with reference to the correlation table stored in the necessary quantity storage unit 336. Accordingly, the quantity specifying unit 320 specifies the quantity of the member PT used for cleaning the ink storage container IS.

The supply quantity calculation unit 321 calculates the quantity of the member PT to be newly supplied to the partner business operator PA based on the quantity of the member PT specified by the quantity specifying unit 320 and the supply quantity of the member PT stored in the supply quantity storage unit 337.

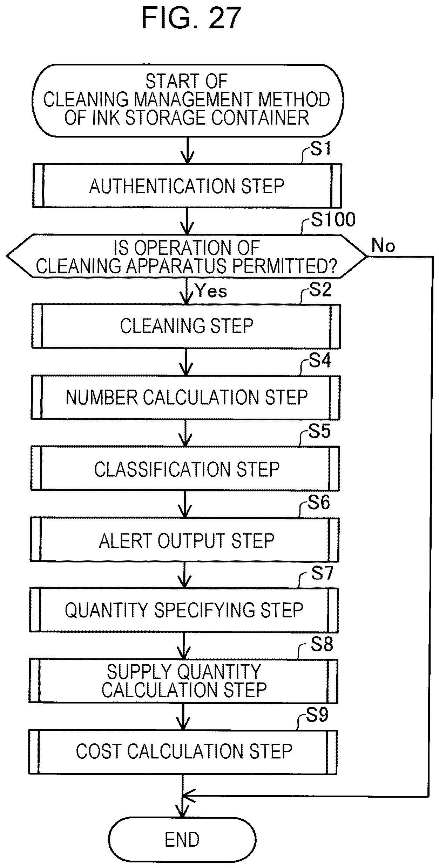

FIG. 27 is a flowchart showing a cleaning management method of the ink storage container IS in the third embodiment. In the present embodiment, a quantity specifying step in step S7 is executed after the cleaning step. The number calculation step, the classification step, and the quantity specifying step may be executed in any order. In the quantity specifying step, the usage quantity of the member PT is specified. After the quantity specifying step, a supply quantity calculation step in step S8 is executed. In the supply quantity calculation step, the quantity of the member PT to be newly supplied to the partner business operator PA is calculated.

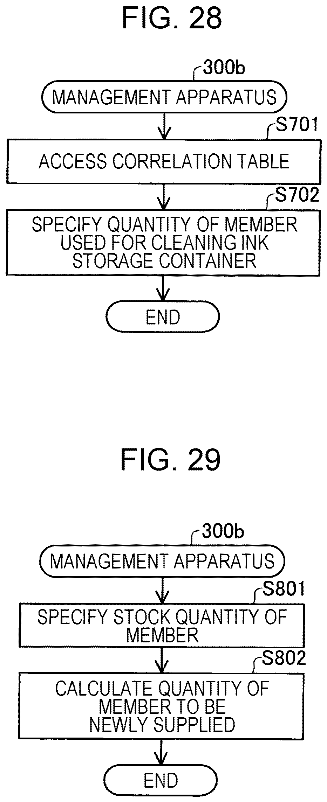

FIG. 28 is a flowchart showing details of the quantity specifying step in the third embodiment. For example, the quantity specifying step starts when the cleaning step is finished. In step S701, the quantity specifying unit 320 of the management apparatus 300b accesses the correlation table stored in the necessary quantity storage unit 336. In step S702, the quantity specifying unit 320 acquires the necessary member quantity corresponding to the operation status of the cleaning operation for each type of the member PT in the correlation table. Accordingly, the quantity specifying unit 320 specifies the quantity of the member PT used for cleaning the ink storage container IS for each type of the member PT.

FIG. 29 is a flowchart showing details of the supply quantity calculation step in the third embodiment. For example, the supply quantity calculation step starts when both of the number calculation step and the quantity specifying step are finished. In step S801, the supply quantity calculation unit 321 of the management apparatus 300b subtracts the usage quantity of the member PT specified by the quantity specifying unit 320 from the supply quantity of the member PT stored in the supply quantity storage unit 337. Accordingly, the supply quantity calculation unit 321 specifies the stock quantity of the member PT at the end of a first period. In step S802, the supply quantity calculation unit 321 calculates a difference between the necessary member quantity corresponding to the production plan in a second period after the first period and the stock quantity of the member PT at the end of the first period as the quantity of the member PT to be newly supplied to the partner business operator PA.

According to the third embodiment, the quantity of the member PT to be newly supplied to the partner business operator PA can be calculated from minimum necessary information such as the operation status of the cleaning operation. That is, transmission and reception functions of the cleaning apparatus 100 can be minimized. Accordingly, since costs of the apparatuses 100 and 200 to be lent to the partner business operator PA can be reduced, a production cost of the refill product RP can be reduced. Furthermore, the production business operator MA can supply the member PT of an appropriate quantity to the partner business operator PA at an appropriate time. Thus, the production business operator MA can continuously operate recycling refill business.

According to the third embodiment, in the cleaning system 10, the operation status of the cleaning operation including at least one of the number of executions of the cleaning operation and the operation time of the cleaning operation is monitored in the cleaning apparatus 100 and is transmitted to the management apparatus 300b via the cleaning control apparatus 200. The management apparatus 300b stores the necessary member quantity in the specific period. In such an aspect, the management apparatus 300b can mechanically specify the quantity of the member PT used for cleaning the ink storage container IS based on the operation status of the cleaning operation and the necessary member quantity. Accordingly, the production business operator MA can quickly identify the quantity of the member PT used for cleaning the ink storage container IS without waiting for a report from the partner business operator PA. Thus, the production business operator MA can supply the member PT of a more appropriate quantity to the partner business operator PA at a more appropriate time.

### D. Fourth Embodiment

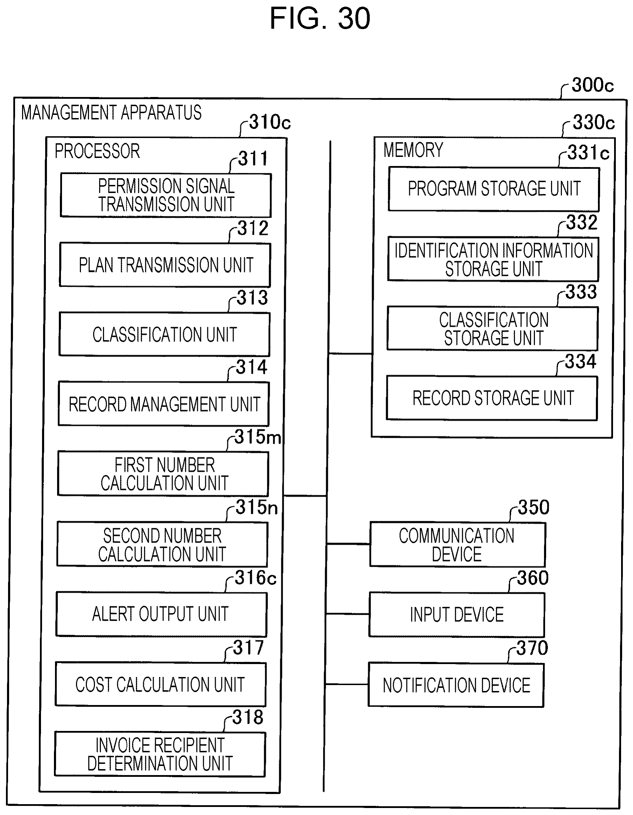

FIG. 30 is a block diagram showing a configuration of a management apparatus 300c in a fourth embodiment. When the partner business operator PA cleans the genuine product of the other company or the compatible product, there may be a difference between a first number of cleaned products and a second number of cleaned products. The first number of cleaned products is the number of cleaned ink storage containers IS calculated using the number of executions of the cleaning operation in the specific period. Accordingly, the number of executions can be basically regarded as the number of cleaned genuine products. The second number of cleaned products is the number of cleaned ink storage containers IS calculated using the operation time of the cleaning operation in the specific period. When there is a predetermined level of difference or more between the first number of cleaned products and the second number of cleaned products, there is a probability that any unauthorized activity such as cleaning of the genuine product of the other company, the compatible product, or the imitation product not allowed by the production business operator MA is performed in the partner business operator PA when the ink storage container IS is cleaned. When a trouble occurs in cleaning the ink storage container IS, such as when the cleaning of the ink storage container IS temporarily stops because of a failure of the cleaning apparatus 100, there may be a difference between the first number of cleaned products and the second number of cleaned products. Thus, when there is a predetermined level of difference or more between the first number of cleaned products and the second number of cleaned products, there is a probability that any trouble has occurred against the intention of the partner business operator PA when the ink storage container IS is cleaned. Therefore, in the present embodiment, an alert is output when the difference between the first number of cleaned products and the second number of cleaned products exceeds a predetermined allowable range. Other configurations are the same as those in the first embodiment. The same configurations as those in the first embodiment will be designated by the same reference numerals and will not be described.

A processor 310c of the management apparatus 300c further functions as a first number calculation unit 315m, a second number calculation unit 315n, and an alert output unit 316c by executing a program stored in a program storage unit 331c of a memory 330c.

The first number calculation unit 315m calculates the number of cleaned ink storage containers IS in the specific period as the first number of cleaned products using the number of executions of the cleaning operation in the specific period received from the operation status transmission unit 215. That is, the first number of cleaned products is the number of cleaned ink storage containers IS estimated from the number of executions of the cleaning operation. In the present embodiment, the first number calculation unit 315m calculates the first number of cleaned products using the number of executions of the cleaning operation for the genuine product of the own company of the ink storage container IS. In this case, the number of executions of the cleaning operation is counted after reading the product identification information of the genuine product of the own company.

The second number calculation unit 315n calculates the number of cleaned ink storage containers IS in the specific period as the second number of cleaned products using the operation time of the cleaning operation in the specific period received from the operation status transmission unit 215. That is, the second number of cleaned products is the number of cleaned ink storage containers IS estimated from the operation time of the cleaning operation. In the present embodiment, the second number calculation unit 315n calculates the second number of cleaned products using the operation time of the cleaning operation for the ink storage container IS including not only the genuine product of the own company but also the genuine product of the other company and the compatible product.

The first number calculation unit 315m may calculate the first number of cleaned products using the number of executions of the cleaning operation for the ink storage container IS including not only the genuine product of the own company but also the genuine product of the other company when the agreement is signed with the other company. In this case, when there is a difference between the first number of cleaned products and the second number of cleaned products, the difference can be handled by calculating the second number of cleaned products via the second number calculation unit 315n using the operation time of the cleaning operation for the genuine product of the own company.

When the difference between the first number of cleaned products and the second number of cleaned products exceeds the predetermined allowable range, the alert output unit 316c outputs the alert. For example, the allowable range may be a fixed value or a variable value that is set and varies in depending on a first number of produced products and a second number of produced products. When the allowable range is a fixed value, the allowable range may be, for example, less than or equal to 10 or less than or equal to 5. When the allowable range is a variable value, the allowable range may be, for example, less than or equal to a number corresponding to 10% of an average value of the first number of produced products and the second number of produced products, or less than or equal to a number corresponding to 5% of the average value. As the number of cleaned ink storage containers IS increases, a probability of the difference between the first number of cleaned products and the second number of cleaned products increases. Thus, for example, the allowable range may be adjusted in accordance with the scheduled cleaning quantity. Alternatively, the second number of cleaned products may be read as a time, a time may be calculated from the first number calculation unit 315m, and the times may be compared with each other.

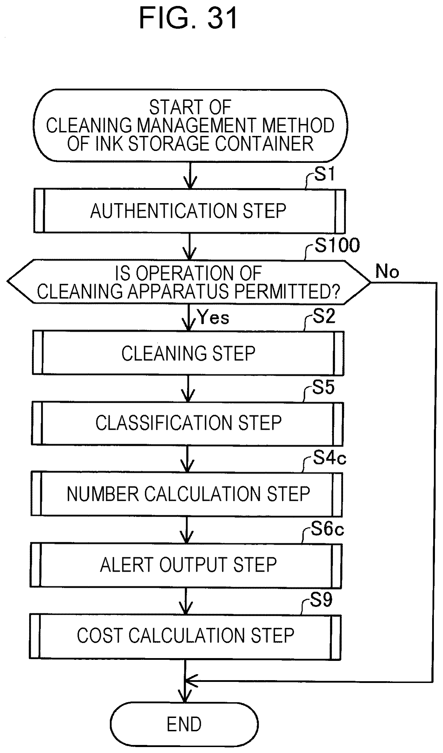

FIG. 31 is a flowchart showing a cleaning management method of the ink storage container IS in the fourth embodiment. In the present embodiment, as will be shown below, the classification step is executed after the cleaning step, and a number calculation step in step S4c is executed after the classification step. In the number calculation step, the first number of cleaned products and the second number of cleaned products are calculated. After the number calculation step, an alert output step in step S6c is executed. In the alert output step, the alert is output in accordance with the difference between the first number of cleaned products and the second number of cleaned products.

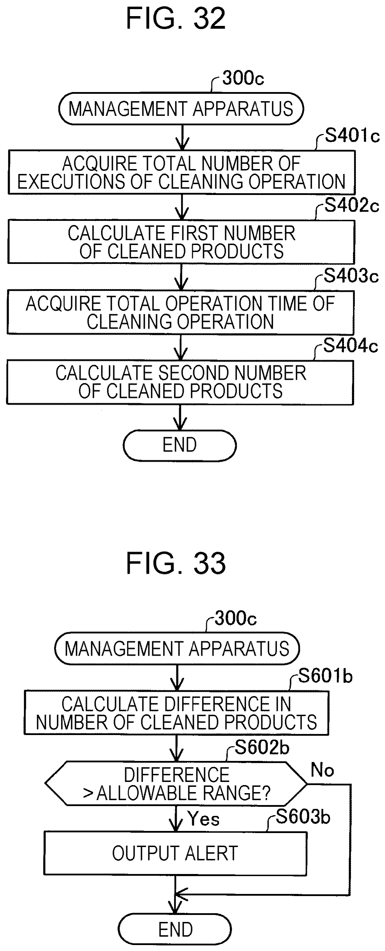

FIG. 32 is a flowchart showing details of the number calculation step in the fourth embodiment. In step S401c, the first number calculation unit 315m of the management apparatus 300c acquires the total number of executions of the cleaning operation in the specific period with reference to the business operator management table TV stored in the record storage unit 334. In step S402c, the first number calculation unit 315m calculates the number of cleaned ink storage containers IS using the total number of executions of the cleaning operation in the specific period and sets the calculated number as the first number of cleaned products. When the execution of the cleaning operation targets only the genuine product of the own company, the first number of cleaned products is supposed to be equal to the number of cleaned genuine products. In step S403c, the second number calculation unit 315n of the management apparatus 300c acquires the total operation time of the cleaning operation in the specific period with reference to the business operator management table TV stored in the record storage unit 334. In step S404c, the second number calculation unit 315n calculates the number of cleaned ink storage containers IS using the total operation time of the cleaning operation in the specific period and sets the calculated number as the second number of cleaned products. For example, when the whole operation time is spent on cleaning the genuine product of the own company, the calculated number may be set as the second number of cleaned products.

FIG. 33 is a flowchart showing details of the alert output step in the fourth embodiment. In step S601b, the alert output unit 316c of the management apparatus 300c calculates the difference between the first number of cleaned products and the second number of cleaned products. When step S602b results in "Yes", that is, when the difference between the first number of cleaned products and the second number of cleaned products exceeds the allowable range, it is determined that there is abnormality in the cleaning system 10, and step S603b is executed. In step S603b, the alert output unit 316c determines that there is a probability that unauthorized activity such as cleaning the genuine product of the other company, the compatible product, or the imitation product against the intention of the production business operator MA is performed or a trouble has occurred in the partner business operator PA, and outputs the alert via the notification device 370. The alert output by the notification device 370 is, for example, text information indicating that abnormality has occurred. When step S602b results in "No", that is, when the difference between the first number of cleaned products and the second number of cleaned products falls within the allowable range, the alert output unit 316c performs the following process. In this case, the alert output unit 316c determines that the current state is normal, and finishes the present flow without outputting the alert.

According to the fourth embodiment, the first number of cleaned products is the number of cleaned ink storage containers IS calculated using the number of executions of the cleaning operation in the specific period for the genuine product of the own company. The second number of cleaned products is the number of cleaned ink storage containers IS calculated using the operation time of the cleaning operation in the same period as that when the first number of cleaned products is calculated, for the ink storage container IS including the genuine product of the other company and the compatible product. Thus, when the ink storage container IS is cleaned, there may be a difference between the first number of cleaned products and the second number of cleaned products when there is a probability that unauthorized activity is performed or a trouble has occurred in the partner business operator PA. When the difference between the first number of cleaned products and the second number of cleaned products exceeds the allowable range, the management apparatus 300c can automatically output the alert. In such an aspect, the production business operator MA can quickly identify the probability that unauthorized activity is performed or a trouble has occurred in the partner business operator PA. This can be useful in the process corresponding to the classification of the ink storage container IS, such as stopping the cleaning operation for the compatible product, calculating the cleaning cost of the compatible product, and determining the invoice recipient.

### E. Fifth Embodiment

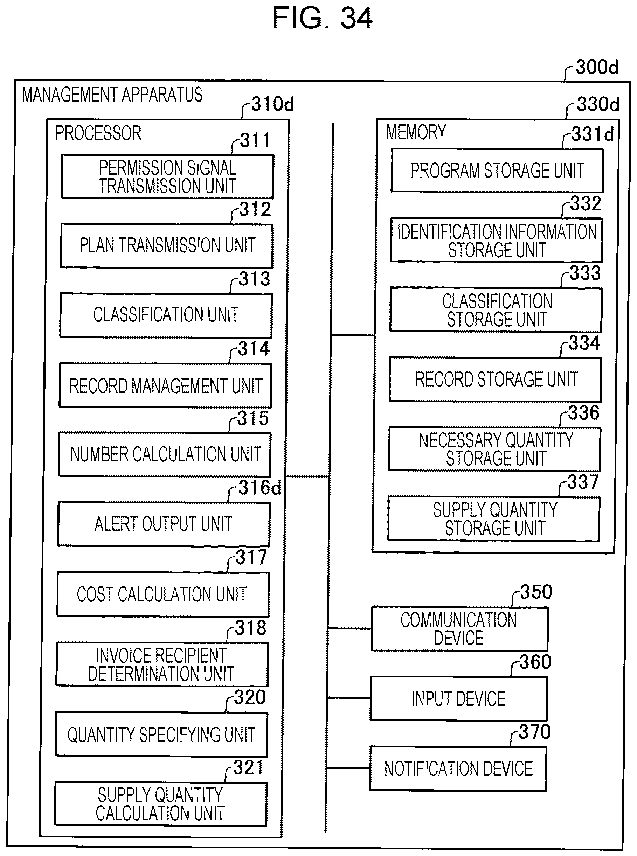

FIG. 34 is a block diagram showing a configuration of a management apparatus 300d in a fifth embodiment. When the ink storage container IS is cleaned without unauthorized activity or a trouble, the number of cleaned ink storage containers IS has a positive correlation with the operation status of the cleaning operation. Thus, when unauthorized activity is performed or a trouble occurs in the partner business operator PA, there may be the following difference. In this case, there may be a difference between the number of cleaned ink storage containers IS in the specific period calculated by the number calculation unit 315 and the number of cleaned ink storage containers IS in the specific period reported from the partner business operator PA via the input device 260 or the like. Furthermore, when the ink storage container IS is cleaned without unauthorized activity or a trouble, the usage quantity of the member PT in the specific period has a positive correlation with the operation status of the cleaning operation in the specific period. When the ink storage container IS is cleaned without unauthorized activity or a trouble, the stock quantity of the member PT in the specific period has a negative correlation with the operation status of the cleaning operation in the specific period. Accordingly, even when the genuine product of the own company is used for the ink storage container IS, there may be the following difference when the ink storage container IS is cleaned using another member different from the member PT supplied from the production business operator MA. In this case, there may be a difference between the usage quantity of the member PT in the specific period specified by the quantity specifying unit 320 and the usage quantity of the member PT in the specific period reported from the partner business operator PA to the production business operator MA via the input device 260 or the like. There may be a difference between the stock quantity of the member PT at the end of the specific period specified by the quantity specifying unit 320 and the stock quantity of the member PT in the specific period reported from the partner business operator PA to the production business operator MA via the input device 260 or the like. When there is a predetermined level of difference or more between the specific quantity calculated by each of the functional units 315 and 320 of the management apparatus 300d and the quantity reported from the partner business operator PA for any of the usage quantity or the stock quantity of the member PT or the number of cleaned ink storage containers IS, there is a probability of the following. In this case, when the ink storage container IS is cleaned, there is a probability that unauthorized activity is performed or a trouble has occurred in the partner business operator PA. Therefore, in the present embodiment, when the difference between the specific quantity calculated by each of the functional units 315 and 320 of the management apparatus 300d and the quantity reported from the partner business operator PA exceeds an allowable range, an alert is output. Other configurations are the same as those in the third embodiment. The same configurations as those in the third embodiment will be designated by the same reference numerals and will not be described.

A processor 310d of the management apparatus 300d further functions as an alert output unit 316d by executing a program stored in a program storage unit 331d of a memory 330d.

When the difference between the specific quantity calculated by each of the functional units 315 and 320 of the management apparatus 300d and the quantity reported from the partner business operator PA exceeds the allowable range, the alert output unit 316d outputs the alert.

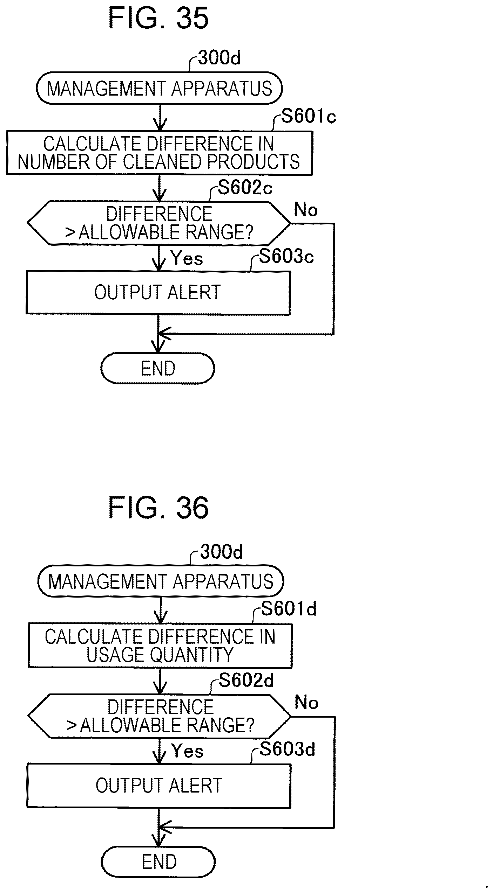

FIG. 35 is a flowchart showing a first example of an alert output step in the fifth embodiment. In step S601c, the alert output unit 316d of the management apparatus 300d executes the following process. The alert output unit 316d calculates the difference between the number of cleaned ink storage containers IS in the specific period calculated by the number calculation unit 315 and the number of cleaned ink storage containers IS in the specific period reported from the partner business operator PA. When step S602c results in "Yes", that is, when the calculated difference exceeds the allowable range, it is determined that abnormality has occurred in the cleaning system 10, and step S603c is executed. In step S603c, the alert output unit 316d determines that there is a probability that unauthorized activity is performed or a trouble has occurred in the partner business operator PA, and outputs the alert via the notification device 370. When step S602c results in "No", that is, when the calculated difference falls within the allowable range, the alert output unit 316d performs the following process. In this case, the alert output unit 316d determines that the current state is normal, that is, the probability that unauthorized activity is performed or a trouble has occurred in the partner business operator PA is low, and finishes the present flow without outputting the alert.

FIG. 36 is a flowchart showing a second example of the alert output step in the fifth embodiment. In step S601d, the alert output unit 316d of the management apparatus 300d executes the following process. The alert output unit 316d calculates a difference between the usage quantity of the member PT in the specific period specified by the quantity specifying unit 320 and the usage quantity of the member PT in the specific period reported from the partner business operator PA to the production business operator MA. When step S602d results in "Yes", that is, when the calculated difference exceeds the allowable range, it is determined that abnormality has occurred in the cleaning system 10, and step S603d is executed. In step S603d, the alert output unit 316d determines that there is a probability that unauthorized activity is performed or a trouble has occurred in the partner business operator PA, and outputs the alert via the notification device 370. When step S602d results in "No", that is, when the calculated difference falls within the allowable range, the alert output unit 316d performs the following process. In this case, the alert output unit 316d determines that the current state is normal, that is, the probability that unauthorized activity is performed or a trouble has occurred in the partner business operator PA is low, and finishes the present flow without outputting the alert.

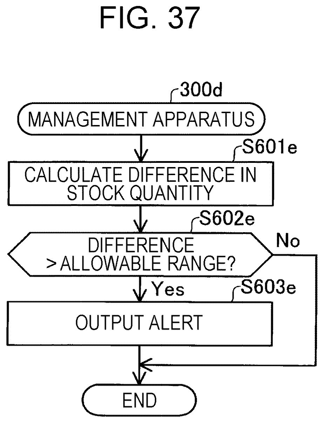

FIG. 37 is a flowchart showing a third example of the alert output step in the fifth embodiment. In step S601e, the alert output unit 316d of the management apparatus 300d executes the following process. The alert output unit 316d calculates a difference between the stock quantity of the member PT at the end of the specific period specified by the supply quantity calculation unit 321 and the stock quantity of the member PT at the end of the specific period reported from the partner business operator PA. When step S602e results in "Yes", that is, when the calculated difference exceeds the allowable range, it is determined that abnormality has occurred in the cleaning system 10, and step S603e is executed. In step S603e, the alert output unit 316d determines that there is a probability that unauthorized activity is performed or a trouble has occurred in the partner business operator PA, and outputs the alert via the notification device 370. When step S602e results in "No", that is, when the calculated difference falls within the allowable range, the alert output unit 316d performs the following process. In this case, the alert output unit 316d determines that the current state is normal, that is, the probability that unauthorized activity is performed or a trouble has occurred in the partner business operator PA is low, and finishes the present flow without outputting the alert.

According to the fifth embodiment, by comparing the quantity reported by the partner business operator PA with the specific quantity calculated by the management apparatus 300d, the management apparatus 300d can determine whether or not there is unauthorized activity or a trouble in the partner business operator PA, and output the alert.

### F. Sixth Embodiment

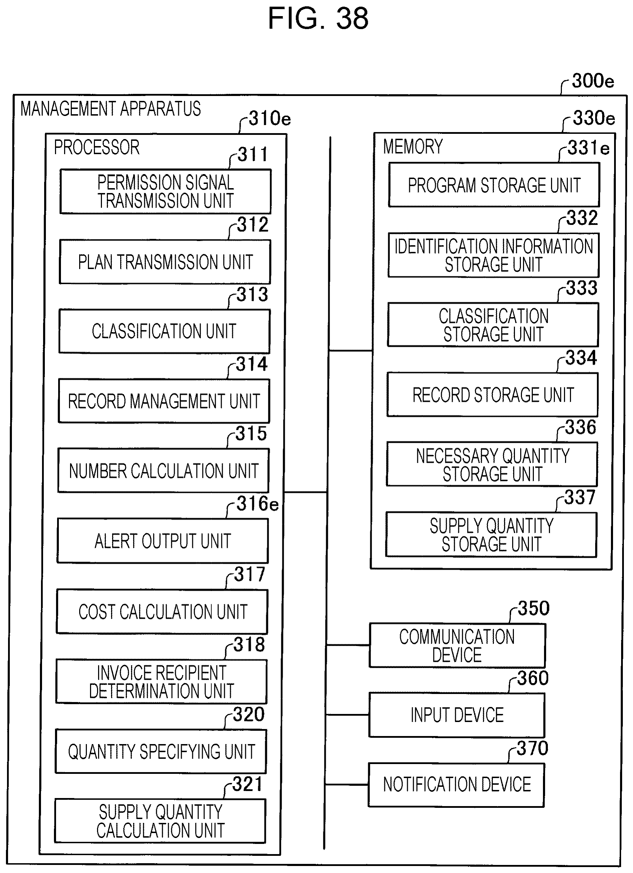

FIG. 38 is a block diagram showing a configuration of a management apparatus 300e in a sixth embodiment. The member PT used for cleaning the ink storage container IS is supplied from the production business operator MA to the partner business operator PA in accordance with the scheduled cleaning quantity. The partner business operator PA cleans the ink storage containers IS corresponding in number to the scheduled cleaning quantity. Thus, when the ink storage container IS is cleaned without unauthorized activity or a trouble, the usage quantity of the member PT in the specific period substantially matches the supply quantity of the member PT supplied from the production business operator MA to the partner business operator PA. Thus, when unauthorized activity is performed or a trouble occurs in the partner business operator PA, there may be the following difference. In this case, there may be a difference between the usage quantity of the member PT in the specific period specified by the quantity specifying unit 320 and the supply quantity of the member PT supplied from the production business operator MA to the partner business operator PA in accordance with the scheduled cleaning quantity. Therefore, in the present embodiment, when the difference between the usage quantity of the member PT in the specific period specified by the quantity specifying unit 320 and the supply quantity of the member PT supplied to the partner business operator PA for production in the specific period exceeds an allowable range, an alert is output. Other configurations are the same as those in the third embodiment. The same configurations as those in the third embodiment will be designated by the same reference numerals and will not be described.

A processor 310e of the management apparatus 300e further functions as an alert output unit 316e by executing a program stored in a program storage unit 331e of a memory 330e.

When the difference between the usage quantity of the member PT in the specific period specified by the quantity specifying unit 320 and the supply quantity of the member PT supplied to the partner business operator PA for production in the specific period exceeds the allowable range, the alert output unit 316e outputs the alert.

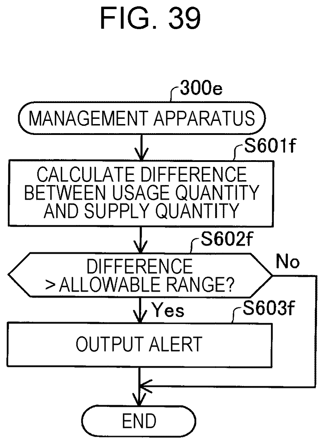

FIG. 39 is a flowchart showing details of an alert output step in the sixth embodiment. In step S601f, the alert output unit 316e of the management apparatus 300e executes the following process. The alert output unit 316e calculates the difference between the usage quantity of the member PT in the specific period specified by the quantity specifying unit 320 and the supply quantity of the member PT in the specific period from the quantity of the member PT stored in the supply quantity storage unit 337. When step S602f results in "Yes", that is, when the calculated difference exceeds the allowable range, it is determined that abnormality has occurred in the cleaning system 10, and step S603f is executed. In step S603f, the alert output unit 316e determines that there is a probability that unauthorized activity is performed or a trouble has occurred in the partner business operator PA, and outputs the alert via the notification device 370. When step S602f results in "No", that is, when the calculated difference falls within the allowable range, the alert output unit 316e performs the following process. In this case, the alert output unit 316e determines that the current state is normal, that is, the probability that unauthorized activity is performed or a trouble has occurred in the partner business operator PA is low, and finishes the present flow without outputting the alert.

According to the sixth embodiment, by comparing the usage quantity of the member PT in the specific period with the supply quantity of the member PT in the specific period, the management apparatus 300e can determine whether or not there is unauthorized activity or a trouble in the partner business operator PA, and output the alert.

### G. Other Embodiments

### G-1. Another Embodiment 1

The management apparatuses 300 and 300a to 300e may further include an abnormality detection unit and an abnormality processing unit. The abnormality detection unit detects occurrence of abnormality in the operation of the cleaning apparatuses 100 and 100a, using the monitoring results of the monitoring devices 130 and 130a. When the abnormality detection unit detects the occurrence of the abnormality in the operation of the cleaning apparatuses 100 and 100a, the abnormality processing unit executes a process for the abnormality. The abnormality processing unit executes, for example, a process of at least one of a first process, a second process, and a third process. The first process is a process of providing notification of a probability that abnormality has occurred to at least one of the production business operator MA and the partner business operator PA. In the first process, the abnormality processing unit may provide the notification together with content of the abnormality and an expected solution. The second process is a process of providing notification of need for dispatching personnel to the business facility of the partner business operator PA to the production business operator MA. In the second process, the abnormality processing unit mechanically determines whether or not dispatching personnel is necessary in accordance with the content of the abnormality. In the second process, the abnormality processing unit may display, on the display devices of the cleaning control apparatuses 200 and 200a, an inquiry screen for inquiring whether or not dispatching personnel is necessary of the partner business operator PA and determine the need for dispatching personnel in accordance with input content of the partner business operator PA via the input device 260. The third process is a process of calculating a compensation amount to be paid to the partner business operator PA in accordance with a loss caused by the abnormality. In the third process, for example, the abnormality processing unit calculates the compensation amount in accordance with a downtime of the cleaning apparatuses 100 and 100a caused by the abnormality. In such an aspect, when abnormality occurs in the operation of the cleaning apparatuses 100 and 100a, the production business operator MA or the partner business operator PA can execute a process for eliminating the abnormality. The production business operator MA may eliminate the abnormality by remotely operating the cleaning apparatuses 100 and 100a via the input device 260.

### G-2. Another Embodiment 2

The management apparatuses 300 and 300a to 300e may further include a guidance unit. The guidance unit prompts the partner business operator PA to provide maintenance of the cleaning apparatuses 100 and 100a in accordance with the operation status of the cleaning operation. For example, when the cleaning operation is continuously executed a predetermined regular number of times or more, the guidance unit displays a guidance text for prompting maintenance of the cleaning apparatuses 100 and 100a on the display devices of the cleaning control apparatuses 200 and 200a. When the cleaning operation is continuously executed for a predetermined regular time or more, the guidance unit generates a buzzer sound for prompting maintenance of the cleaning apparatuses 100 and 100a from the audio generation devices of the cleaning control apparatuses 200 and 200a. In such an aspect, a probability that abnormality occurs in the cleaning apparatuses 100 and 100a can be reduced. Accordingly, when abnormality occurs in the cleaning apparatuses 100 and 100a, a decrease in cleaning efficiency of the ink storage container IS can be reduced.

### G-3. Another Embodiment 3

The production business operator MA may provide an incentive related to the cleaning cost CC to the partner business operator PA in accordance with the operation status of the cleaning operation. For example, the production business operator MA may set the cleaning cost CC to be higher as the number of produced ink storage containers IS increases. In this case, for example, the cost calculation unit 317 may calculate the cleaning cost CC by determining a coefficient in accordance with the operation status of the cleaning operation in the specific period and multiplying the determined coefficient by each term of the calculation formula. Alternatively, for example, the production business operator MA may set the cleaning cost CC to be higher as a period of continuous use of the lent apparatuses 100 and 200 is longer. In this case, for example, the cost calculation unit 317 may calculate the cleaning cost CC by acquiring the period of continuous use of the lent apparatuses 100 and 200, determining the coefficient in accordance with the acquired period of continuous use, and multiplying the determined coefficient by each term of the calculation formula. In such an aspect, the cleaning of the ink storage container IS can be promoted.

### G-4. Another Embodiment 4

The cleaning apparatuses 100 and 100a and the cleaning control apparatuses 200 and 200a may be provided from the production business operator MA to the partner business operator PA by causing the partner business operator PA to purchase the cleaning apparatuses 100 and 100a and the cleaning control apparatuses 200 and 200a. Even in such an aspect, the production business operator MA can cause the partner business operator PA to clean the ink storage container IS under management of the production business operator MA using the networks N1 and N2.

### G-5. Another Embodiment 5

When the same operation is executed a plurality of times for the same ink storage container IS, the operation status transmission unit 215 may transmit accessory information indicating that the same operation is executed a plurality of times, to the management apparatuses 300 and 300a to 300e together with the number of executions of the cleaning operation. In such an aspect, even when the same operation is executed a plurality of times for the same ink storage container IS, such as when the cleaning operation is executed a plurality of times for the same ink storage container IS in accordance with the cleaning level of the ink storage container IS, the following can be achieved. The management apparatuses 300 and 300a to 300e can more accurately calculate or specify the specific quantity such as the number of cleaned ink storage containers IS and the usage quantity of the member PT, and the cleaning cost CC using the operation status of the cleaning operation.

### G-6. Another Embodiment 6

At least a part of the functions of the cleaning apparatuses 100 and 100a may be implemented by the cleaning control apparatuses 200 and 200a. At least a part of the functions of the cleaning control apparatuses 200 and 200a may be implemented by the cleaning apparatuses 100 and 100a or implemented by the management apparatuses 300 and 300a to 300e. In such an aspect, the configuration of the cleaning system 10 can be changed, as appropriate.

### G-7. Another Embodiment 7

The above technology is not limited to the consumables such as the ink storage container IS related to the use of the printing apparatus 900 and can also be applied to when a container that can be refilled with contents is collected, cleaned, and reused. That is, the contents accommodated in the container may be, for example, a detergent other than the ink IN. When the above technology is applied to a target other than the ink storage container IS, the term "ink storage container" in the present disclosure can be replaced with "container", as appropriate, and the term "ink" can be replaced with "contents", as appropriate. In such an aspect, versatility of the cleaning system 10 can be improved.

### G-8. Another Embodiment 8

In the above embodiments, at least a part of the configurations implemented by hardware may be replaced with software, and at least a part of the configurations implemented by software can be implemented by hardware such as a circuit configuration.

### H. Other Aspects

The present disclosure is not limited to the above embodiments and can be implemented with various configurations without departing from the concept thereof. For example, technical features of embodiments corresponding to the technical features in each aspect according to SUMMARY can be replaced or combined, as appropriate, to address some or all of the above issues or to achieve some or all of the above effects. In addition, unless the technical features are described as being essential in the present specification, the technical features can be deleted, as appropriate.
(1) According to an aspect of the present disclosure, there is provided a cleaning system. A cleaning system includes a cleaning apparatus that executes a cleaning operation on a container, a control apparatus that controls the cleaning operation of the cleaning apparatus, and a management apparatus that manages the control apparatus, in which the control apparatus and the management apparatus are configured to communicate with each other via a network. According to this aspect, the cleaning system can cause another business operator to clean the container under management of a production business operator using the network. Accordingly, by managing the other business operator in accordance with the environmental convention, the production business operator can export the container complying with the environmental convention from the first country to the second country and produce the refill product in the second country.
(2) In the above aspect, the control apparatus may include an identification information transmission unit that transmits identification information to the management apparatus, and the management apparatus may include an identification information storage unit that stores identification information of the control apparatus in advance, and a permission signal transmission unit that permits the control apparatus to perform the cleaning operation of the cleaning apparatus when the identification information received from the identification information transmission unit matches the identification information stored in the identification information storage unit. According to this aspect, when the identification information received from the control apparatus owned by another business operator other than the production business operator matches the identification information stored in the management apparatus owned by the production business operator, the cleaning system can permit the cleaning operation of the cleaning apparatus owned by the other business operator. Accordingly, the cleaning system can cause the other business operator to clean the container under management of the production business operator using the network. Accordingly, by managing the other business operator in accordance with the environmental convention, the production business operator can export the container complying with the environmental convention from the first country to the second country and produce the refill product in the second country.
(3) In the above aspect, the control apparatus may further include an operation status transmission unit that transmits operation status of the cleaning operation including at least one of the number of executions of the cleaning operation and an operation time of the cleaning operation in a predetermined period to the management apparatus, and the management apparatus may further include a cost calculation unit that calculates a cleaning cost in the period based on a specific quantity correlated with the operation status of the cleaning operation. According to this aspect, the cleaning system can calculate the cleaning cost based on the specific quantity correlated with the operation status of the cleaning operation.
(4) In the above aspect, the management apparatus may further include a classification unit that classifies the container on which the cleaning operation is executed in the period as any of a genuine product of an own company, a genuine product of another company, or a compatible product other than the genuine product of the own company and the genuine product of the other company, and an invoice recipient determination unit that determines an invoice recipient of the cleaning cost in accordance with the classification. According to this aspect, the cleaning system can classify the container on which the cleaning operation is executed as any of the genuine product of the own company, the genuine product of the other company, or the compatible product. When the container is classified as the genuine product of the own company, the cleaning system can determine that the invoice recipient of the cleaning cost is the production business operator. In such an aspect, the production business operator can outsource the cleaning of the container to the other business operator by paying the cleaning cost to the other business operator. Accordingly, a burden of the production business operator necessary for cleaning the container can be reduced. When the container is classified as the genuine product of the other company, the cleaning system can determine that the invoice recipient of the cleaning cost is the other company. In such an aspect, the production business operator can collect the cleaning cost from the other business operator by sending an invoice for the cleaning cost to the other business operator. Accordingly, the production business operator can offset a cost related to the cleaning operation for the genuine product of the other company by receiving the cleaning cost from the other business operator while implementing environmental protection by continuing the cleaning of the container without interruption.
(5) In the above aspect, the management apparatus may further include an alert output unit that outputs an alert when the container is classified as the compatible product. According to this aspect, when the container is classified as the compatible product, the cleaning system can output the alert. In such an aspect, the production business operator can quickly identify a probability that the compatible product is cleaned in the other business operator. This can be useful in the process corresponding to the classification of the container, such as stopping the cleaning operation for the compatible product, calculating the cleaning cost of the compatible product, and sending the invoice.
(6) In the above aspect, the management apparatus may further include a cleaning level determination unit that acquires a cleaning level of the container and determines whether or not the cleaning level is greater than or equal to a predetermined cleaning level. According to this aspect, the cleaning system can acquire the cleaning level of the container and determine whether or not the acquired cleaning level is greater than or equal to the predetermined cleaning level. In such an aspect, the production business operator can manage the other business operator who cleans the container, after identifying the cleaning level of the container. Accordingly, the production business operator having a business facility in the second country can import the container complying with the environmental convention from the first country.
(7) In the above aspect, the control apparatus may further include an operation status transmission unit that transmits operation status of the cleaning operation including at least one of the number of executions of the cleaning operation and an operation time of the cleaning operation in a predetermined period to the management apparatus, and the management apparatus may further include a quantity storage unit that stores a necessary member quantity correlated with at least one of the number of executions of the cleaning operation and the operation time of the cleaning operation in the period, and a quantity specifying unit that specifies a quantity of a member used for cleaning the container based on the operation status received from the operation status transmission unit and the necessary member quantity stored in the quantity storage unit. According to this aspect, the cleaning system can specify the quantity of the member used for cleaning the container. Accordingly, the cleaning system can supply the member of an appropriate quantity from the production business operator to the other business operator who cleans the container, at an appropriate time.
(8) In the above aspect, the control apparatus may further include an operation status transmission unit that transmits operation status of the cleaning operation including the number of executions of the cleaning operation and an operation time of the cleaning operation in a predetermined period to the management apparatus, and the management apparatus may further include a first number calculation unit that calculates the number of cleaned containers using the number of executions of the cleaning operation received from the operation status transmission unit, a second number calculation unit that calculates the number of cleaned containers using the operation time of the cleaning operation received from the operation status transmission unit, and an alert output unit that outputs an alert when a difference between the number of cleaned containers calculated by the first number calculation unit and the number of cleaned containers calculated by the second number calculation unit exceeds a predetermined range. According to this aspect, the cleaning system can output the alert when the difference between the number of cleaned containers calculated by the first number calculation unit and the number of cleaned containers calculated by the second number calculation unit exceeds the predetermined range. Accordingly, the cleaning system can notify the production business operator of a probability that unauthorized activity is performed or a trouble has occurred in the other business operator who cleans the container.

Not all of a plurality of constituents included in each aspect of the present disclosure described above are essential. To address some or all of the above issues or to achieve some or all of the effects according to the present specification, some of the plurality of constituents can be changed, deleted, or replaced with other new constituents, as appropriate, and some of limiting contents can be deleted. In addition, to address some or all of the above issues or to achieve some or all of the effects according to the present specification, some or all of the technical features included in one aspect of the present disclosure described above can be combined with some or all of the technical features included in another aspect of the present disclosure described above to form an independent aspect of the present disclosure.

The present disclosure can also be implemented in various aspects other than the cleaning system. For example, the present disclosure can be implemented in aspects such as a cleaning management method of an ink storage container using a cleaning system, a manufacturing method of a cleaning system, a control method of a cleaning system, a computer program implementing the control method, and a non-transitory recording medium on which the computer program is recorded.

## Claims

1. A cleaning system comprising:
a cleaning apparatus that executes a cleaning operation on a container;
a control apparatus that controls the cleaning operation of the cleaning apparatus; and
a management apparatus that manages the control apparatus, wherein
the control apparatus and the management apparatus are configured to communicate with each other via a network.

2. The cleaning system according to claim 1, wherein
the control apparatus includes an identification information transmission unit that transmits identification information to the management apparatus, and
the management apparatus includes an identification information storage unit that stores identification information of the control apparatus in advance, and a permission signal transmission unit that permits the control apparatus to perform the cleaning operation of the cleaning apparatus when the identification information received from the identification information transmission unit matches the identification information stored in the identification information storage unit.

3. The cleaning system according to claim 1, wherein
the control apparatus further includes an operation status transmission unit that transmits operation status of the cleaning operation including at least one of the number of executions of the cleaning operation and an operation time of the cleaning operation in a predetermined period to the management apparatus, and
the management apparatus further includes a cost calculation unit that calculates a cleaning cost in the period based on a specific quantity correlated with the operation status of the cleaning operation.

4. The cleaning system according to claim 3, wherein
the management apparatus further includes
a classification unit that classifies the container on which the cleaning operation is executed in the period as any of a genuine product of an own company, a genuine product of another company, or a compatible product other than the genuine product of the own company and the genuine product of the other company, and
an invoice recipient determination unit that determines an invoice recipient of the cleaning cost in accordance with the classification.

5. The cleaning system according to claim 4, wherein
the management apparatus further includes an alert output unit that outputs an alert when the container is classified as the compatible product.

6. The cleaning system according to claim 1, wherein
the management apparatus further includes a cleaning level determination unit that acquires a cleaning level of the container and determines whether or not the cleaning level is greater than or equal to a predetermined cleaning level.

7. The cleaning system according to claim 1, wherein
the control apparatus further includes an operation status transmission unit that transmits operation status of the cleaning operation including at least one of the number of executions of the cleaning operation and an operation time of the cleaning operation in a predetermined period to the management apparatus, and
the management apparatus further includes
a quantity storage unit that stores a necessary member quantity correlated with at least one of the number of executions of the cleaning operation and the operation time of the cleaning operation in the period, and
a quantity specifying unit that specifies a quantity of a member used for cleaning the container based on the operation status received from the operation status transmission unit and the necessary member quantity stored in the quantity storage unit.

8. The cleaning system according to claim 1, wherein
the control apparatus further includes an operation status transmission unit that transmits operation status of the cleaning operation including the number of executions of the cleaning operation and an operation time of the cleaning operation in a predetermined period to the management apparatus, and
the management apparatus further includes
a first number calculation unit that calculates the number of cleaned containers using the number of executions of the cleaning operation received from the operation status transmission unit,
a second number calculation unit that calculates the number of cleaned containers using the operation time of the cleaning operation received from the operation status transmission unit, and
an alert output unit that outputs an alert when a difference between the number of cleaned containers calculated by the first number calculation unit and the number of cleaned containers calculated by the second number calculation unit exceeds a predetermined range.
